# EUROPEAN PATENT SPECIFICATION

(11) **EP 2 233 780 B1**
(45) Date of publication and mention of the grant of the patent: **24.04.2019**
(21) Application number: 10157902.7
(22) Date of filing: 26.03.2010
(51) Int. Cl.: F16F 15/129

(54) **Torque fluctuation absorber**
Drehmomentschwankungsaufnehmer
Absorbeur de fluctuation de couple

(30) Priority: 27.03.2009 JP 2009078923
(43) Date of publication of application: 29.09.2010
(73) Proprietor: Aisin Seiki Kabushiki Kaisha, Kariya-shi, Aichi 448-8650 (JP)
(72) Inventor: Saeki, Tomohiro, Kariya-shi Aichi 448-8650 (JP); Takeuchi, Makoto, Kariya-shi Aichi 448-8650 (JP); Nakagaito, Satoshi, Kariya-shi Aichi 448-8650 (JP); Yamazumi, Atsushi, Kariya-shi Aichi 448-8650 (JP)
(74) Representative: TBK

(56) References cited:
- FR-A1- 2 370 902
- FR-A1- 2 524 097
- FR-A1- 2 557 657

## Description

The present disclosure relates to a torque fluctuation absorber according to the preamble of claim 1 that absorbs a fluctuation torque between the rotary shafts, and in particular, to a torque fluctuation absorber having a hysteresis section that suppresses a fluctuation torque by a hysteresis torque due to friction or the like.

### BACKGROUND DISCUSSSION

The torque fluctuation absorber is located on a power transmission path between an engine and a transmission, to absorb (suppress) a fluctuation torque by the engine and the transmission. There are torque fluctuation absorbers having a damper section that absorbs a fluctuation torque by a spring force, a hysteresis section that absorbs (suppresses) a fluctuation torque by a hysteresis torque due to friction or the like, and a limiter section which causes a slippage when a torsion in the rotary shafts cannot be absorbed by the damper section or the hysteresis section. Further, there are torque fluctuation absorbers in which hysteresis torque changes according to torsion angle in its limiter section.

For example, in JP 2007-218347 A, there is disclosed a torque fluctuation absorber including a disc member rotating integrally with a flywheel to which a driving force from a drive source is transmitted, side plates that sandwich the disc member, a damper mechanism which is accommodated in window portions of the side plates, and absorbs torque fluctuations transmitted from the side of the side plates, a first hysteresis mechanism which is arranged between the side plates and a hub, and generates a small hysteresis by biasing a low friction member towards one of the side plates and the hub, to in a rotation allowance zone in which rotation is allowed, and a second hysteresis mechanism which generates a great hysteresis by biasing a high friction material towards one of the side plates and the hub.

However, in the torque fluctuation absorber described in JP 2007-218347 A, since disc springs, plates, and the like are located so as to be axially stacked in many layers respectively on the both sides of the flange portion, which results in a great number of components, it is difficult to attempt to achieve a downsizing and a cost reduction of the torque fluctuation absorber. Further, in the torque fluctuation absorber described in JP 2007-218347 A, since the two plates are caulking-fixed with a stopper pin, the flange portion through which the stopper pin is inserted to pass is formed to be thick, which increases the cost thereof.

FR 2 557 657 A1 shows a usual torque fluctuation absorber, which comprises a first plate member to which a rotary power is transmitted from a first rotary shaft; a second plate member, arranged axially with a predetermined distance from the first plate member, wherein the second plate member transmits a rotary power to a second rotary shaft; a third plate member which rotates integrally with the first plate member, wherein the third plate member is arranged axially with a predetermined distance from the second plate member; a plurality of slide members located between the second plate member and the third plate member; and an elastic member which is supported by the first plate member and, wherein the elastic member biases the second plate member towards the plurality of slide members; wherein the plurality of slide members are configured to generate a first hysteresis torque when a torsion angle between the second plate member and the third plate member is within a predetermined range, and to generate a second hysteresis torque greater than the first hysteresis torque when the torsion angle exceeds the predetermined range.

FR 2 370 902 A1 shows a generic torque fluctuation absorber according to the preamble of claim 1. FR 2 524 097 shows an another kind of torque fluctuation absorber.

### SUMMARY OF THE INVENTION

It is the object of the present invention to further develop a torque fluctuation absorber according to the preamble of claim 1 such that the torque fluctuation absorber can be downsized and its manufacturing costs can be reduced.

The object of the present invention is achieved by a torque fluctuation absorber having the features of claim 1.

Further advantageous developments of the present invention are defined in the dependent claims.

It is an advantage of the present invention to provide a torque fluctuation absorber in which a hysteresis torque changes according to a torsion angle, so that the torque fluctuation absorber can be manufactured at a low cost and downsized.

Other aspects, advantages, effects and modes of the present invention will become apparent from the entire of the present disclosures including claims as appended and drawings.

### BRIEF DESCRIPTION OF THE DRAWINGS

FIG. 1 is a partial cross-sectional view in a radial direction schematically showing a structure of a torque fluctuation absorber according to Example 1.
FIG. 2 is an enlarged partial cross-sectional view schematically showing a structure of a hysteresis section in the torque fluctuation absorber according to Example 1.
FIG. 3 is an enlarged partial plan view schematically showing a structure of a hub member of the hysteresis section in the torque fluctuation absorber according to Example 1 of the present disclosure.
FIG. 4 is an enlarged partial cross-sectional view schematically showing a structure of a hysteresis section in a torque fluctuation absorber according to Example 2.
FIG. 5 is an enlarged partial cross-sectional view schematically showing a structure of a hysteresis section in a torque fluctuation absorber according to Example 3.
FIG. 6 are enlarged partial plan views schematically showing an engaging state of thrust members in a modified example of the hysteresis section in the torque fluctuation absorber according to Example 3.
FIG. 7 is an enlarged cross-sectional view schematically showing an engaging state between the thrust member and a high friction material in the modified example of the hysteresis section in the torque fluctuation absorber according to Example 3.
FIG. 8 is an enlarged partial cross-sectional view schematically showing a structure of a hysteresis section in a torque fluctuation absorber according to Example 4.
FIG. 9 is an enlarged partial plan view schematically showing an engaging state between a thrust member and a side plate of the hysteresis section in the torque fluctuation absorber according to Example 4.
FIG. 10 is an enlarged partial cross-sectional view schematically showing a structure of a hysteresis section in a torque fluctuation absorber according to Example 5.
FIG. 11 is an enlarged partial cross-sectional view schematically showing a structure as a modified example of the hysteresis section in the torque fluctuation absorber according to Example 5.
FIG. 12 is an enlarged partial cross-sectional view schematically showing a structure of a hysteresis section in a torque fluctuation absorber according to Example 6.
FIG. 13 is a partial perspective view schematically showing a structure of a friction member of the hysteresis section in the torque fluctuation absorber according to Example 6.

In the present disclosure, there are various preferred modes as set forth below, but not restrictive thereto.

### DETAILED DESCRIPTION

### [Mode 1]

Mode 1 corresponds to the first aspect.

### [Mode 2]

In the torque fluctuation absorber of mode 2, it is preferable that a predetermined slide member among the plurality of slide members is circumferentially movable within a circumferentially predetermined distance range relative to the second plate member; and the second plate member restricts the predetermined slide member from circumferentially moving when the predetermined slide member reaches the predetermined distance range. The plurality of slide members generate the first hysteresis torque when a torsion is caused between the first plate member and the second plate member in a state in which the predetermined slide member is circumferentially movable relative to the second plate member, and generate the second hysteresis torque when a torsion is caused between the first plate member and the second plate member in a state in which the predetermined slide member is prevented (restricted) from circumferentially moving by the second plate member.

### [Mode 3]

In the torque fluctuation absorber of mode 3, it is preferable that a position at which the second hysteresis torque is generated is on the (radially-)outer circumferential side from a position at which the first hysteresis torque is generated.

### [Mode 4]

In the torque fluctuation absorber of mode 4, it is preferable that the second plate member has a concave or hole portion; termed collectively "concave or hole portion" herein; the predetermined slide member is a control plate having a stopper portion which is circumferentially movable within a circumferential distance range of the concave or hole portion; the plurality of slide members have: a low friction material located between the control plate and the second plate member; a high friction material which is located on the first plate member side of the control plate, and whose frictional coefficient is higher than that of the low friction material; and a thrust member which is located between the high friction material and the elastic member, and engages so as to be axially movable relative to the first plate member. When a torsion is caused between the first plate member and the second plate member in a state in which the stopper portion is circumferentially movable within a circumferential distance range of the concave or hole portion, the low friction material slides relative to the second plate member or the control plate, and when a torsion is caused between the first plate member and the second plate member in a state in which the stopper portion is restricted (prevented) from circumferentially moving by the concave or hole portion, the high friction material slides relative to the control plate or the thrust member.

### [Mode 5]

In the torque fluctuation absorber of mode 5, it is preferable that the control plate is subjected to a roughening treatment onto its surface facing the high friction material.

### [Mode 6]

In the torque fluctuation absorber of mode 6, it is preferable that the high friction material is engaged or fixed so as to be incapable of rotating relative to the control plate or the thrust member.

### [Mode 7]

In the torque fluctuation absorber of mode 7, it is preferable that the second plate member has a concave or hole portion; the predetermined slide member is a control plate having a stopper portion which is circumferentially movable within a circumferential distance range of the concave or hole portion; the plurality of slide members have: a low friction material located between the control plate and the second plate member; and a thrust member which is located between the control plate and the elastic member, and engages so as to be axially movable relative to the first plate member; the control plate or the thrust member is subjected to a roughening treatment onto its sliding surface between the control plate and the thrust member so as to have a frictional coefficient higher than a frictional coefficient of the low friction material. When a torsion is caused between the first plate member and the second plate member in a state in which the stopper portion is circumferentially movable within a circumferential distance range of the concave or hole portion, the low friction material slides relative to the second plate member or the control plate, and when a torsion is caused between the first plate member and the second plate member in a state in which the stopper portion is restricted from circumferentially moving by the concave or hole portion, the high friction material slides relative to the control plate or the thrust member.

### [Mode 8]

In the torque fluctuation absorber of mode 8, it is preferable that the low friction member is engaged or fixed so as to be incapable of rotating relative to the control plate or the second plate member.

### [Mode 9]

In the torque fluctuation absorber of mode 9, it is preferable that the torque fluctuation absorber further comprises a third plate member which rotates integrally with the first plate member, and is arranged axially with a predetermined distance from the second plate member; a second control plate which is located between the second plate member and the third plate member; a second low friction material which is located between the second control plate and the second plate member; and a second thrust member which is located between the second control plate and the third plate member, and whose frictional coefficient is higher than that of the second low friction material, the second thrust member engages so as to be axially movable relative to the third plate member. The second control plate has a second concave or hole portion which engages so as to be axially movable relative to the stopper portion. When a torsion is caused between the second plate member and the third plate member in a state in which the stopper portion is circumferentially movable within a circumferential distance range of the concave or hole portion, the second low friction material slides relative to the second plate member or the second control plate; and when a torsion is caused between the second plate member and the third plate member in a state in which the stopper portion is restricted from circumferentially moving by the concave or hole portion, the second thrust member slides relative to the second control plate.

### [Mode 10]

In the torque fluctuation absorber of mode 10, it is preferable that the second low friction member is engaged or fixed so as to be incapable of rotating relative to the control plate or the second plate member.

### [Mode 11]

In the torque fluctuation absorber of mode 11, it is preferable that the torque fluctuation absorber further comprises: a third plate member which rotates integrally with the first plate member, and is arranged axially with a predetermined distance from the second plate member; a second thrust member which is located between the second plate member and the third plate member; and a second high friction material which is located between the second thrust member and the third plate member, and whose frictional coefficient is higher than that of the second thrust member. The second thrust member has a second concave or hole portion which engages so as to be axially movable relative to the stopper portion, and when a torsion is caused between the second plate member and the third plate member in a state in which the stopper portion is circumferentially movable within a circumferential distance range of the concave or hole portion, the second thrust member slides relative to the second plate member, and when a torsion is caused between the third plate member and the second plate member in a state in which the stopper portion is restricted from circumferentially moving by the concave or hole portion, the second high friction material slides relative to the second thrust member or the third plate member.

### [Mode 12]

In the torque fluctuation absorber of mode 12, it is preferable that the third plate member is subjected to a roughening treatment onto its surface facing the second high friction material.

### [Mode 13]

In the torque fluctuation absorber of mode 13, it is preferable that the second high friction material is engaged or fixed so as to be incapable of rotating relative to the second thrust member or the third plate member.

### [Mode 14]

In the torque fluctuation absorber of mode 14, it is preferable that the torque fluctuation absorber further comprises: a third plate member which rotates integrally with the first plate member, and is arranged axially with a predetermined distance from the second plate member, and a second thrust member which is located between the second plate member and the third plate member. The third plate member or the second thrust member is subjected to a roughening treatment onto its sliding surface between the third plate member and the second thrust member so as to have a frictional coefficient higher than a frictional coefficient of a sliding surface between the second thrust member and the second plate member, the second thrust member has a second concave or hole portion which engages so as to be axially movable relative to the stopper portion. When a torsion is caused between the second plate member and the third plate member in a state in which the stopper portion is circumferentially movable within a circumferential distance range of the concave or hole portion, the second thrust member slides relative to the second plate member, and when a torsion is caused between the third plate member and the second plate member in a state in which the stopper portion is restricted from circumferentially moving by the concave or hole portion, the second thrust member slides relative to the third plate member.

### [Mode 15]

In the torque fluctuation absorber of mode 15, it is preferable that the second plate member has a concave or hole portion; the predetermined slide member is a thrust member which has a stopper portion circumferentially movable within a circumferential distance range of the concave or hole portion, and is pressed on the second plate member. The plurality of slide members have a high friction material which is located on the first plate member side of the thrust member, and whose frictional coefficient is higher than that of the thrust member; and a pressure plate which is located between the high friction material and the elastic member, and is engaged so as to be axially movable relative to the first plate member. When a torsion is caused between the first plate member and the second plate member in a state in which the stopper portion is circumferentially movable within a circumferential distance range of the concave or hole portion, the thrust member slides relative to the second plate member, and when a torsion is caused between the first plate member and the second plate member in a state in which the stopper portion is restricted (prevented) from circumferentially moving by the concave or hole portion, the high friction material slides relative to the thrust member or the pressure plate.

### [Mode 16]

In the torque fluctuation absorber of mode 16, it is preferable that the pressure plate is subjected to a roughening treatment onto its surface facing the high friction material.

### [Mode 17]

In the torque fluctuation absorber of mode 17, it is preferable that the high friction material is engaged or fixed so as to be relatively unrotatable to the thrust member or the pressure plate.

### [Mode 18]

In the torque fluctuation absorber of mode 18, it is preferable that the second plate member has a concave or hole portion; the predetermined slide member is a thrust member which has a stopper portion circumferentially movable within a circumferential distance range of the concave or hole portion, and is pressed on the second plate member. The plurality of slide members have a pressure plate which is located between the high friction material and the elastic member, and engages so as to be axially movable relative to the first plate member, the thrust member or the pressure plate is subjected to a roughening treatment onto its sliding surface between the thrust member and the pressure plate so as to have a frictional coefficient higher than a frictional coefficient of a sliding surface between the thrust member and the second plate member. When a torsion is caused between the first plate member and the second plate member in a state in which the stopper portion is circumferentially movable within a circumferential distance range of the concave or hole portion, the thrust member slides relative to the second plate member, and when a torsion is caused between the first plate member and the second plate member in a state in which the stopper portion is restricted from circumferentially moving by the concave or hole portion, the thrust member slides relative to the pressure plate.

### [Mode 19]

In the torque fluctuation absorber of mode 19, it is preferable that the torque fluctuation absorber further comprises: a third plate member which rotates integrally with the first plate member, and is arranged axially with a predetermined distance from the second plate member; a second thrust member which is located axially in series with the plurality of slide members between the second plate member and the third plate member; and a second high friction material which is located between the second thrust member and the third plate member, and whose frictional coefficient is higher than that of the thrust member. The second thrust member has a second stopper portion which is circumferentially movable within a circumferential distance range of the concave or hole portion. When a torsion is caused between the second plate member and the third plate member in a state in which the second stopper portion is circumferentially movable within a circumferential distance range of the concave or hole portion, the second thrust member slides relative to the second plate member, and when a torsion is caused between the second plate member and the third plate member in a state in which the second stopper portion is restricted from circumferentially moving by the concave or hole portion, the second high friction material slides relative to the second thrust member or the third plate member.

### [Mode 20]

In the torque fluctuation absorber of mode 20, it is preferable that the stopper portion is engaged so as to be incapable of rotating relative to the second stopper portion.

### [Mode 21]

In the torque fluctuation absorber of mode 21, it is preferable that the third plate member is subjected to a roughening treatment onto its surface facing the second high friction material.

### [Mode 22]

In the torque fluctuation absorber of mode 22, it is preferable that the second high friction material is engaged or fixed so as to be incapable of rotating relative to the second thrust member or the third plate member.

### [Mode 23]

In the torque fluctuation absorber of mode 23, it is preferable that the torque fluctuation absorber further comprises: a third plate member which rotates integrally with the first plate member, and is arranged axially with a predetermined distance from the second plate member; and a second thrust member which is located axially in series with the plurality of slide members between the second plate member and the third plate member. The second thrust member has a second stopper portion which is circumferentially movable within a circumferential distance range of the concave or hole portion. The third plate member or the second thrust member is subjected to a roughening treatment onto its sliding surface between the third plate member and the second thrust member so as to have a frictional coefficient higher than a frictional coefficient of a sliding surface between the second thrust member and the second plate member. When a torsion is caused between the second plate member and the third plate member in a state in which the second stopper portion is circumferentially movable within a circumferential distance range of the concave or hole portion, the second thrust member slides relative to the second plate member, and when a torsion is caused between the second plate member and the third plate member in a state in which the second stopper portion is restricted from circumferentially moving by the concave or hole portion, the second thrust member slides relative to the third plate member.

### [Mode 24]

In the torque fluctuation absorber of mode 24, it is preferable that the torque fluctuation absorber further comprises: a third plate member which rotates integrally with the first plate member, and is arranged axially with a predetermined distance from the second plate member; a second thrust member which is located between the second plate member and the third plate member; and a second high friction material which is located between the second thrust member and the third plate member, and whose frictional coefficient is higher than that of the second thrust member. The second thrust member has a second concave or hole portion which engages so as to be axially movable relative to the stopper portion. When a torsion is caused between the second plate member and the third plate member in a state in which the stopper portion. is circumferentially movable within a circumferential distance range of the concave or hole portion, the second thrust member slides relative to the second plate member, and when a torsion is caused between the second plate member and the third plate member in a state in which the stopper portion is restricted from circumferentially moving by the concave or hole portion, the second high friction material slides relative to the second thrust member or the third plate member.

### [Mode 25]

In the torque fluctuation absorber of mode25, it is preferable that the second plate member has a concave or hole portion; the predetermined slide member is a friction member which has a stopper portion circumferentially movable within a circumferential distance range of the concave or hole portion, and is pressed on the second plate member; the plurality of slide members have a pressure plate which is located between the friction member and the elastic member and engages so as to be axially movable relative to the first plate member; the friction member is configured to have a frictional coefficient of its surface facing the pressure plate higher than a frictional coefficient of its surface facing the second plate member. When a torsion is caused between the first plate member and the second plate member in a state in which the stopper portion is circumferentially movable within a circumferential distance range of the concave or hole portion, the friction member slides relative to the second plate member, and when a torsion is caused between the first plate member and the second plate member in a state in which the stopper portion is restricted from circumferentially moving by the concave or hole portion, the friction member slides relative to the pressure plate.

### [Mode 26]

In the torque fluctuation absorber of mode 26, it is preferable that the torque fluctuation absorber further comprises: a third plate member which rotates integrally with the first plate member, and is arranged axially with a predetermined distance from the second plate member, the friction member has an extension portion extending on the (radially-)outer circumferential side from the leading end of the stopper portion; the extension portion is arranged between the second plate member and the third plate member, and is configured to have a frictional coefficient of its surface facing the third plate member higher than a frictional coefficient of its surface facing the second plate member. When a torsion is caused between the second plate member and the third plate member in a state in which the stopper portion is circumferentially movable within a circumferential distance range of the concave or hole portion, the extension portion slides relative to the second plate member, and when a torsion is caused between the second plate member and the third plate member in a state in which the stopper portion is restricted from circumferentially moving by the concave or hole portion, the extension portion slides relative to the third plate member.

### [Mode 27]

In the torque fluctuation absorber of mode 27, it is preferable that the friction member is formed into a ring shape as a portion except for the stopper portion and the extension portion, and the extension portion is not formed into a ring shape.

### [Mode 28]

In the torque fluctuation absorber of mode 28, it is preferable that the friction member is made of an elastic material.

### [Mode 29]

In the torque fluctuation absorber of mode 29, it is preferable that the torque fluctuation absorber further comprises: a third thrust member which is located on the (radially-)inner circumferential side from the plurality of slide members, and is slidably pressed on the second plate member, to engage so as to be axially movable relative to the first plate member; and a second elastic member which is located on the (radially-)inner circumferential side from the plurality of slide members, and is supported by the first plate member, to bias the third thrust member towards the second plate member.

### [Mode 30]

In the torque fluctuation absorber of mode 30, it is preferable that the torque fluctuation absorber further comprises: a fourth thrust member which is located on the (radially-)inner circumferential side from the plurality of slide members, and is slidabily pressed on the second plate member and the third plate member, to engage so as to be axially movable relative to the third plate member.

### [Mode 31]

Mode 31 corresponds to the second aspect.

### [Mode 32]

In the torque fluctuation absorber of mode 32, it is preferable that a position at which the second hysteresis torque is generated is on the (radially-)outer circumferential side from a position at which the first hysteresis torque is generated.

### [Mode 33]

In the torque fluctuation absorber of mode 33, it is preferable that the slide members are composed of a plurality of slide members, a predetermined slide member thereamong is configured to be circumferentially movable within a circumferentially predetermined distance range relative to the third plate member, and to be restricted (prevented) from circumferentially moving by the third plate member when the predetermined slide member reaches the predetermined distance range. The plurality of slide members generate the first hysteresis torque when a torsion is caused between the second plate member and the third plate member in a state in which the predetermined slide member is circumferentially movable relative to the third plate member, and generate the second hysteresis torque when a torsion is caused between the second plate member and the third plate member in a state in which the predetermined slide member is restricted from circumferentially moving by the third plate member.

### [Mode 34]

In the torque fluctuation absorber of mode 34, it is preferable that the third plate member has a concave or hole portion, the predetermined slide member is a thrust member which has a stopper portion circumferentially movable within a circumferential distance range of the concave or hole portion, the plurality of slide members have a high friction material which is located between the thrust member and the third plate member, and whose frictional coefficient is higher than that of the thrust member. When a torsion is caused between the second plate member and the third plate member in a state in which the stopper portion is circumferentially movable within a circumferential distance range of the concave or hole portion, the thrust member slides relative to the third plate member, and when a torsion is caused between the second plate member and the third plate member in a state in which the stopper portion is restricted from circumferentially moving by the concave or hole portion, the high friction material slides relative to the thrust member or the second plate member.

### [Mode 35]

In the torque fluctuation absorber of mode 35, it is preferable that the second plate member is subjected to a roughening treatment onto its surface facing the high friction material.

### [Mode 36]

In the torque fluctuation absorber of mode 36, it is preferable that the high friction material is engaged so as to be incapable of rotating relative to the thrust member.

### [Mode 37]

This embodiment is not part of the invention.

In the torque fluctuation absorber of mode 37, it is preferable that the slide member is composed of only one slide member, and the slide member is configured to be circumferentially movable within a circumferentially predetermined distance range relative to the third plate member, and to be restricted from circumferentially moving by the third plate member when the slide member reaches the predetermined distance range, the slide member generates the first hysteresis torque when a torsion is caused between the second plate member and the third plate member in a state in which the predetermined slide member is circumferentially movable relative to the third plate member, and generates the second hysteresis torque when a torsion is caused between the second plate member and the third plate member in a state in which the predetermined slide member is restricted from circumferentially moving by the third plate member.

### [Mode 38]

In the torque fluctuation absorber of mode 38, it is preferable that the third plate member has a concave or hole portion, the slide member is a thrust member which has a stopper portion circumferentially movable within a circumferential distance range of the concave or hole portion, the thrust member or the second plate member is subjected to a roughening treatment onto its sliding surface between the thrust member and the second plate member so as to have a frictional coefficient higher than a frictional coefficient of a sliding surface between the thrust member and the third plate member. When a torsion is caused between the second plate member and the third plate member in a state in which the stopper portion is circumferentially movable within a circumferential distance range of the concave or hole portion, the thrust member slides relative to the third plate member, and when a torsion is caused between the second plate member and the third plate member in a state in which the stopper portion is restricted from circumferentially moving by the concave or hole portion, the thrust member slides relative to the second plate member.

### [Mode 39]

In the torque fluctuation absorber of mode 39, it is preferable that the torque fluctuation absorber has a second thrust member which is located between the second plate member and the elastic member, and is biased towards the second plate member by the elastic member, to engage so as to be axially movable relative to the first plate.

According to the aspects and the modes of the present disclosure, it is possible to realize a structure in which a hysteresis torque changes according to a torsion angle by one elastic member in its hysteresis section, and the number of components is reduced due to the multi-functioning of its slide members, which makes it possible to attempt to achieve a low cost and a shortening of its axial length. The number of components is reduced by abolishing caulking, which makes it possible to attempt to achieve a low cost.

Other advantages and meritorious effects of the preferred modes and disclosed exemplary embodiments and examples will become apparent in the entire disclosure.

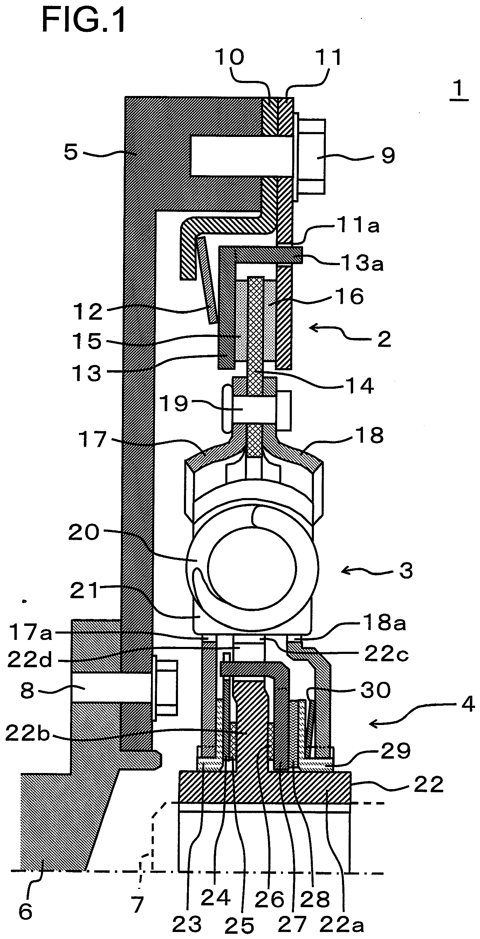

A torque fluctuation absorber according to a first exemplary embodiment includes a first plate member (reference numeral 18 in FIG. 1) to which a rotary power is transmitted from a first rotary shaft (reference numeral 6 in FIG. 1), a second plate member (reference numeral 22b in FIG. 1) which is arranged axially with a predetermined distance from the first plate member, and transmits the rotary power to a second rotary shaft (reference numeral 7 in FIG. 1), a plurality of slide members (reference numerals 26, 27, 28, and 29 in FIG. 1) which are located axially in series between the first plate member and the second plate member, and come into slidably contact with each other adjacently, and one elastic member (reference numeral 30 in FIG. 1) which is supported by the first plate member, and biases the plurality of slide members towards the second plate member, and the plurality of slide members are configured to generate a first hysteresis torque when a torsion angle between the first plate member and the second plate member is within a predetermined range, and to generate a second hysteresis torque greater than the first hysteresis torque when the torsion angle exceeds the predetermined range.

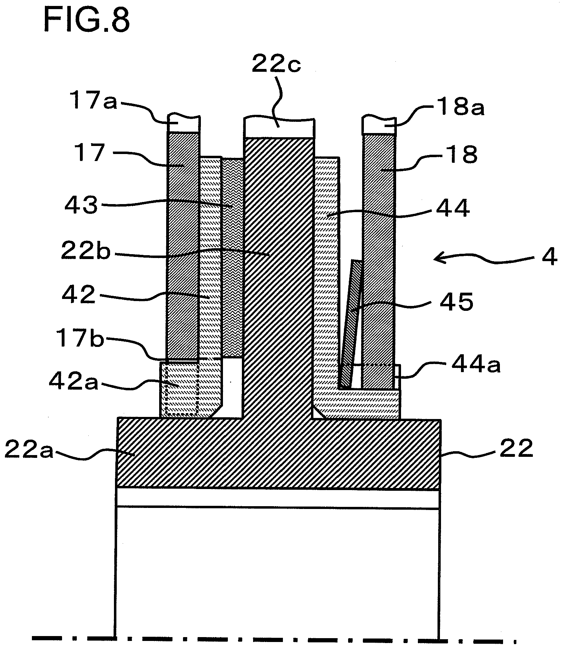

A torque fluctuation absorber according to a second exemplary embodiment of the present disclosure includes a first plate member (reference numeral 18 in FIG. 1) to which a rotary power is transmitted from a first rotary shaft (corresponding to reference numeral 6 in FIG. 1), a second plate member (reference numeral 22b in FIG. 8) which is arranged axially with a predetermined distance from the first plate member, and transmits the rotary power to a second rotary shaft (corresponding to reference numeral 7 in FIG. 1), a third plate member (reference numeral 17 in FIG. 8) which is arranged axially with a predetermined distance from the second plate member, and rotates integrally with the first plate member, slide members (reference numerals 42 and 43 in FIG. 8) which are located between the second plate member and the third plate member, and an elastic member (reference numeral 45 in FIG. 8) which is supported by the first plate member, and biases the second plate member towards the plurality of slide members, and the slide members are configured to generate a first hysteresis torque when a torsion angle between the second plate member and the third plate member is within a predetermined range, and to generate a second hysteresis torque greater than the first hysteresis torque when the torsion angle exceeds the predetermined range.

The reference to the reference numerals in the figures mentioned hereinabove in the first and second exemplary embodiments represents only by way of an example for the better understanding of the disclosure and not restrictive to the illustrated embodiments in the figures.

Still further aspects and modes will become apparent from the entire disclosure including the drawings. In the following, preferred examples are illustrated with reference to the drawings by way of examples with reference to symbols, which are merely intended to help better understanding and should not be regarded as restrictive to the illustrated formulations.

### [Example 1]

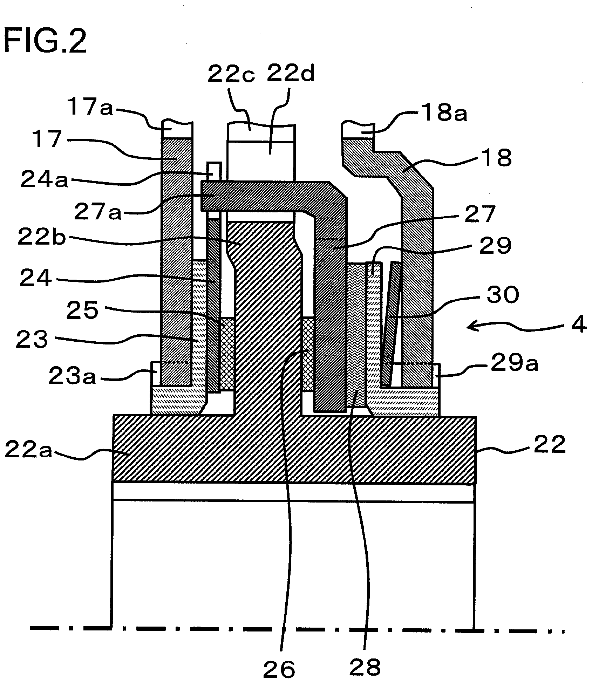

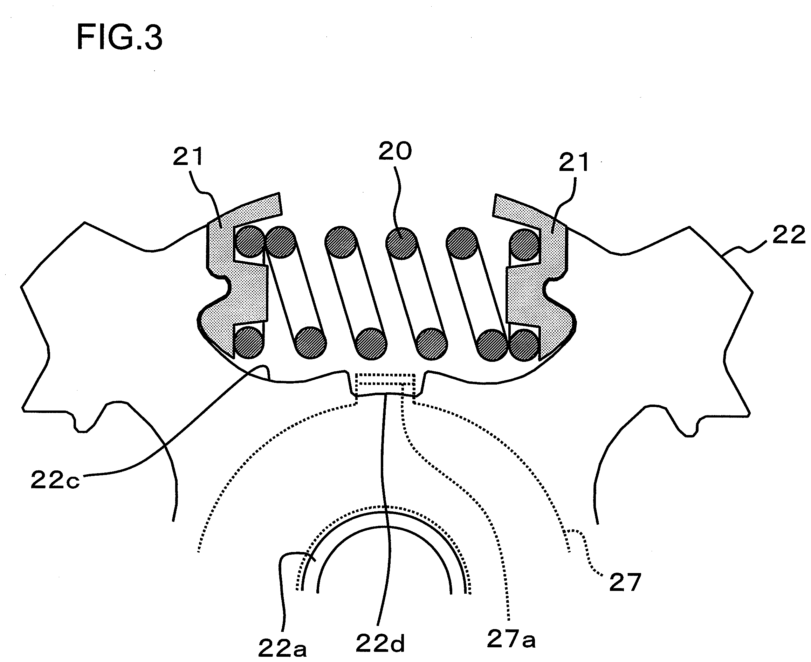

A torque fluctuation absorber according Example 1 will be described with reference to the drawings. FIG. 1 is a partial cross-sectional view in a radial direction schematically showing a structure of a torque fluctuation absorber according to Example 1. FIG. 2 is an enlarged partial cross-sectional view schematically showing a structure of a hysteresis section in the torque fluctuation absorber according to Example 2. FIG. 3 is an enlarged partial plan view schematically showing a structure of a hub member of the hysteresis section in the torque fluctuation absorber according to Example 1.

Referring to FIG. 1, a torque fluctuation absorber 1 according Example 1 is provided on a power transmission route between an engine side rotary shaft 6 and a transmission side rotary shaft 7 for example, and is an apparatus that absorbs (suppresses) a fluctuation torque due to a torsion between the side rotary shaft 6 and the transmission side rotary shaft 7. The torque fluctuation absorber 1 has a damper section 3 which has a torsion buffering function, and absorbs a fluctuation torque by a spring force (elastic force), a hysteresis section 4 that absorbs (suppresses) a fluctuation torque by a hysteresis torque due to friction or the like, and a limiter section 2 which causes a slippage when a torsion between the rotary shafts cannot be absorbed by the damper section 3 or the hysteresis section 4. The damper section 3 is located in parallel with the hysteresis section 4 on the power transmission route. The limiter section 2 is located in series with the damper section 3 and the hysteresis section 4 on the power transmission route. The torque fluctuation absorber 1 can be used particularly for a hybrid vehicle without a limiter section in the vehicle.

The torque fluctuation absorber 1 has a flywheel 5, a bolt(s) 9, a support plate 10, a cover plate 11, a disc spring 12, a pressure plate 13, a lining plate 14, friction materials 15 and 16, side plates 17 and 18, a rivet(s) 19, a coil spring 20, seat members 21, a hub member 22, a thrust member 23, a control plate 24, low friction materials 25 and 26, a control plate 27, a high friction material 28, a thrust member 29, and a disc spring 30 (annular conical spring) as its components (refer to FIG. 1).

The flywheel 5 is a ring-shaped plate member fastened to the engine side rotary shaft 6 with a bolt(s) 8 (refer to FIG. 1). The flywheel 5 has a cylindrical portion projecting to the limiter section 2 side at its (radially-)outer circumferential portion, and the support plate 10 and the cover plate 11 are fastened to the cylindrical portion with the bolt 9.

The bolt 9 is a member to fasten the support plate 10 and the cover plate 11 to the flywheel 5 (refer to FIG. 1).

The support plate 10 is a ring-shaped plate member located between the flywheel 5 and the cover plate 11, and a component of the limiter section 2 (refer to FIG. 1). The support plate 10 is fixedly attached to the flywheel 5 with the bolt 9 so as to be integral with the cover plate 11 at its (radially-)outer circumferential portion. The support plate 10 is distanced from the cover plate 11 at its (radially-)inner circumferential portion. The support plate 10 is slidabily pressed on the disc spring 12.

The cover plate 11 is a ring-shaped member located on the opposite side of the flywheel 5 side of the support plate 10 (on the right side in FIG. 1), and a component of the limiter section 2 (refer to FIG. 1). The cover plate 11 is fixedly attached to the flywheel 5 with the bolt 9 so as to be integral with the support plate 10 at its (radially-)outer circumferential portion. The cover plate 11 is distanced from the support plate 10 at its (radially-)inner circumferential portion. The cover plate 11 has a hole portion 11a to support the pressure plate 13 to be relatively unrotatable and axially movable. A convex portion 13a of the pressure plate 13 is inserted into the hole portion 11a so as to be relatively unrotatable and axially movable. The cover plate 11 is slidably pressed on the friction material 16 on the sliding surface of its (radially-)inner circumferential portion.

The disc spring 12 is a dish-shaped spring (annular conical spring) arranged between the support plate 10 and the pressure plate 13, and a component member of the limiter section 2. The disc spring 12 biases the pressure plate 13 towards the friction material 15 (refer to FIG. 1).

The pressure plate 13 is a ring-shaped member arranged between the disc spring 12 and the friction material 15, and a component member of the limiter section 2 (refer to FIG. 1). The pressure plate 13 has the convex portion 13a for being supported so as to be relatively unrotatable and axially movable relative to the cover plate 11. The convex portion 13a is inserted into the hole portion 11a of the cover plate 13 to be relatively unrotatable and axially movable. The pressure plate 13 is biased towards the friction material 15 by the disc spring 12, to be slidably pressed on with the friction material 15 on its sliding surface.

The lining plate 14 is a ring-shaped member arranged between the friction materials 15 and 16 between the cover plate 11 and the pressure plate 13, and a component member of the limiter section 2(refer to FIG. 1). The lining plate 14 is sandwiched between the side plate 17 and the side plate 18 at its (radially-)inner circumferential portion, and is fixed together with the side plate 17 and the side plate 18 with the rivet 19. The friction materials 15 and 16 are fixedly attached to the (radially-)outer circumferential portion of the lining plate 14 with a rivet, an adhesive, or the like.

The friction material 15 is a component member of the limiter section 2, and is arranged between the lining plate 14 and the pressure plate 13 (refer to FIG. 1). The friction material 15 is fixedly attached to the lining plate 14 with a rivet, an adhesive, or the like. The friction material 15 is slidably pressed on the pressure plate 13.

The friction material 16 is a component member of the limiter section 2, and is arranged between the lining plate 14 and the cover plate 11 (refer to FIG. 1). The friction material 16 is fixedly attached to the lining plate 14 with a rivet, an adhesive, or the like. The friction material 16 is slidably pressed on the cover plate 11.

The side plate 17 is a ring-shaped member located on the side of the engine of the flange portion 22b of the hub member 22 (on the left side in FIG. 1), and a component member of the damper section 3 and the hysteresis section 4 (refer to FIG. 1). The side plate 17 is integrally fixed to the lining plate 14 and the side plate 18 with the rivet 19 at the portion in the vicinity of its (radially-)outer circumferential end portion. The side plate 17 has a window portion 17a for accommodating the coil spring 20 and the seat members 21 in the damper section 3 as the intermediate portion, and the circumferential end face of the window portion 17a abuts to the seat members 21 so as to be capable of engaging and disengag. The side plate 17 comes into contact with the thrust member 23 in the hysteresis section 4 on the (radially-)inner circumferential side from the damper section 3 (refer to FIG. 2). The side plate 17 engages with a stopper portion 23a of the thrust member 23 at its (radially-)inner circumferential end portion so as to be relatively unrotatable and axially movable, and is supported so as to be capable of relatively rotating relative to the hub member 22 (the hub portion 22a) via the thrust member 23.

The side plate 18 is a ring-shaped member located on the side of the transmission of the flange portion 22b of the hub member 22 (on the right side in FIG. 1), and a component member of the damper section 3 and the hysteresis section 4 (refer to FIG. 1). The side plate 18 is integrally fixed to the lining plate 14 and the side plate 17 with the rivet 19 at the portion in the vicinity of its (radially-)outer circumferential end portion. The side plate 18 has a window portion 18a for accommodating the coil spring 20 and the seat members 21 in the damper section 3 as the intermediate portion, and the circumferential end face of the window portion 18a abuts to the seat members 21 so as to be capable of engaging and disengaging. The side plate 18 supports the disc spring 30 in the hysteresis section 4 on the (radially-)inner circumferential side from the damper section 3 (refer to FIG. 2). The side plate 18 engages with a stopper portion 29a of the thrust member 29 at its (radially-)inner circumferential end portion so as to be relatively unrotatble and axially movable, and is supported so as to be capable of relatively rotating relative to the hub member 22 (the hub portion 22a) via the thrust member 29.

The rivet 19 is a member for integrally fixing the lining plate 14, the side plate 17, and the side plate 18 (refer to FIG.1).

The coil spring 20 is a component of the damper section 3, and is accommodated in window portions 17a, 18a, and 22c formed in the side plates 17 and 18 and the hub member 22 (flange portion 22b), to abut to the seat members 21 located on the both ends (refer to FIG. 1). The coil spring 20 contracts when the side plates 17 and 18 and the hub member 22 relatively rotate, to absorb a shock due to a rotational difference (torsion) between the side plates 17 and 18 and the hub member 22. As the coil spring 20, a coil spring in a straight shape or a straight-shaped spring is curved to be assembled may be used. However, an arc spring curved along the circumferential direction may be used in order to achieve a broad torsion.

The seat members 21 are components of the damper section 3, and are accommodated in the window portions 17a, 18a, and 22c formed in the side plates 17 and 18 and the hub member 22 (flange portion 22b) to be arranged between the circumferential end faces of the window portions 17a, 18a, and 22c and the end portion of the coil spring 20 (refer to FIG. 1). Resin may be used as the seat member 21 in order to reduce a friction of the coil spring 20.

The hub member 22 is a member which outputs a rotary power from the damper section 3 and the hysteresis section 4 toward the transmission, and a component member of the damper section 3 and the hysteresis section 4 (refer to FIG. 1). The hub member 22 has the flange portion 22b extending from a predetermined area of the outer circumference of the hub portion 22a. The hub portion 22a spline-engages with the transmission side rotary shaft 7 at its (radially-)inner circumferential surface. The hub portion 22a supports the side plate 17 so as to be capable of relatively rotating via the thrust member 23, and supports the side plate 18 so as to be capable of relatively rotating via the thrust member 29 at its outer circumference. The flange portion 22b has the coil spring 20 and the window portion 22c for accommodating the seat member 21 in the damper section 3 at the outer circumference, and the circumferential end face of the window portion 22c abuts to the seat member 21 so as to be capable of engaging and disengaging (refer to FIGs. 2 and 3). The flange portion 22b has a concave portion 22d (may be a hole portion) notched in the portion on the (radially-)inner circumferential side from the window portion 22c. A stopper portion 27a of the control plate 27 is inserted into the concave portion 22d, and it is possible for the stopper portion 27a to circumferentially move within a circumferential distance range of the concave portion 22d. That is the concave portion 22d allows the hub member 22 and the control plates 24 and 27 to relatively rotate within a circumferentially movable range of the stopper portion 27a, and restricts the hub member 22 and the control plates 24 and 27 from relatively rotating when the stopper portion 27a abuts to the circumferential end wall of the concave portion 22d. The flange portion 22b is sandwiched to be held slidably at the axial wall surface on the (radially-)inner circumferential side from the concave portion 22d by the low friction materials 25 and 26.

The thrust member 23 is a ring-shaped member arranged between the side plate 17 and the control plate 24, and a component of the hysteresis section 4 (refer to FIG. 2). The thrust member 23 is made of resin. The frictional coefficient of the thrust member 23 is defined to be higher than the frictional coefficients of the low friction materials 25 and 26, and to be lower than the frictional coefficient of the high friction material 28. Note that the frictional coefficient of the thrust member 23 may be defined to be equal to the frictional coefficients of the low friction materials 25 and 26. The thrust member 23 is arranged axially between the side plate 17 and the control plate 24, and is slidably pressed on the side plate 17 and the control plate 24. The thrust member 23 does not slide relative to the control plate 24 when a torsion is caused between the control plate 24 and the hub member 22 within a circumferentially movable range of the stopper portion 27a relative to the concave portion 22d, and slides relative to the control plate 24 when the stopper portion 27a abuts to the circumferential end wall of the concave portion 22d and a torsion is further caused between the control plate 24 and the hub member 22. The thrust member 23 radially intervenes between the side plate 17 and the hub portion 22a as well. The thrust member 23 has a stopper portion 23a engaging to be relatively unrotatable and axially movable relative to the (radially-)inner circumferential end portion of the side plate 17. The thrust member 23 serves as a slide bearing (bush) for supporting the side plate 17 relatively rotatable relative to the hub portion 22a.

The control plate 24 is a ring-shaped plate for controlling to slide relative to the thrust member 23 or slide relative to the low friction material 25 according to a torsion angle between the side plate 17 and the hub member 22, and a component of the hysteresis section 4 (refer to FIG. 2). The control plate 24 is made of metal. The control plate 24 has a concave portion 24a which engages so as to be relatively unrotatable and axially movable relative to the stopper portion 27a of the control plate 27 at its (radially-)outer circumferential portion. The control plate 24 rotates along with the control plate 27, and is rotatable relative to the hub member 22 within a circumferentially movable range of the stopper portion 27a relative to the concave portion 22d, and is restricted from rotating relative to the hub member 22 when the stopper portion 27a abuts to the circumferential surface of the concave portion 22d. The control plate 24 is slidably pressed on the thrust member 23, and slides relative to the thrust member 23 when the stopper portion 27a abuts to the circumferential end wall of the concave portion 22d and a torsion is further caused between the side plate 17 and the hub member 22. The control plate 24 is slidably pressed on the low friction material 25, and slides relative to the low friction material 25 when a torsion is caused between the control plate 24 and the hub member 22 within a circumferentially movable range of the stopper portion 27a relative to the concave portion 22d. Note that the control plate 24 may be made of any material such as iron or resin.

The low friction material 25 is a ring-shaped member arranged between the control plate 24 and the flange portion 22b, and a component of the hysteresis section 4 (refer to FIG. 2). The frictional coefficient of the low friction material 25 is defined to be lower than the frictional coefficients of the thrust member 23 and the high friction material 28, and is defined to be equal to the frictional coefficient of the low friction material 26. Note that the frictional coefficient of the low friction material 25 may be defined to be equal to the frictional coefficient of the thrust member 23. The low friction material 25 is slidably pressed on the control plate 24 and the flange portion 22b. The low friction material 25 slides relative to the control plate 24 or the flange portion 22b when a torsion is caused between the control plate 24 and the hub member 22 within a circumferentially movable range of the stopper portion 27a relative to the concave portion 22d. Note that the low friction material 25 may be configured to engage so as to be relatively unrotatable (may be fixed) relative to one of the control plate 24 and the flange portion 22b, and to be slidable relative to the other one. The outer diameter of the low friction material 25 is less than the outer diameter of the high friction material 28.

The low friction material 26 is a ring-shaped member arranged between the control plate 27 and the flange portion 22b, and a component of the hysteresis section 4 (refer to FIG. 2). The frictional coefficient of the low friction material 26 is defined to be lower than the frictional coefficients of the thrust member 23 and the high friction material 28, and is defined to be equal to the frictional coefficient of the low friction material 25. Note that the frictional coefficient of the low friction material 26 may be defined to be equal to the frictional coefficient of the thrust member 23. The low friction material 26 is slidably pressed on the control plate 27 and the flange portion 22b. The low friction material 26 slides relative to the control plate 27 or the flange portion 22b when a torsion is caused between the control plate 27 and the hub member 22 within a circumferentially movable range of the stopper portion 27a relative to the concave portion 22d. Note that the low friction material 26 may be configured to engage so as to be relatively unrotatable (may be fixed) relative to one of the control plate 27 and the flange portion 22b, and to be slidable relative to the other one. The outer diameter of the low friction material 26 is less than the outer diameter of the high friction material 28.

The control plate 27 is a ring-shaped plate for controlling to slide relative to the high friction material 28 or slide relative to the low friction material 26 according to a torsion angle between the side plate 18 and the hub member 22, and a component of the hysteresis section 4 (refer to FIG. 2). The control plate 27 is made of metal. The control plate 27 has the stopper portion 27a extending towards the side plate 17 in its axial direction at its (radially-)outer circumferential portion. The stopper portion 27a is inserted into the concave portion 22d of the flange portion 22b, and is circumferentially movable within a circumferential distance range of the concave portion 22d. That is, the stopper portion 27a allows the hub member 22 and the control plates 24 and 27 to relatively rotate within a circumferentially movable range thereof relative to the concave portion 22d, and restricts (prevents) the hub member 22 and the control plates 24 and 27 from relatively rotating when the stopper portion 27a abuts to the circumferential end wall of the concave portion 22d. The stopper portion 27a engages with the concave portion 24a of the control plate 24 so as to be relatively unrotatable and axially movable. The control plate 27 rotates along with the control plate 24, and is rotatable relative to the hub member 22 within a circumferentially movable range of the stopper portion 27a relative to the concave portion 22d, and is restricted (prevented) from rotating relative to the hub member 22 when the stopper portion 27a abuts to the circumferential end wall (radial wall) of the concave portion 22d. The control plate 27 is slidably pressed on the low friction material 26, and slides relative to the low friction material 26 when a torsion is caused between the control plate 27 and the hub member 22 within a circumferentially movable range of the stopper portion 27a relative to the concave portion 22d. The control plate 27 is slidably pressed on the high friction material 28, and slides relative to the high friction material 28 when the stopper portion 27a abuts to the circumferential end wall of the concave portion 22d and a torsion is further caused between the side plate 18 and the hub member 22. The control plate 27 is preferably roughened onto its sliding surface relative to the high friction material 28 by a surface treatment, a thermal treatment, or the like. In this way, the high friction material 28 can be held by the control plate 27 when the high friction material 28 and the thrust member 29slide each other, and even when the control plate 27 and the high friction material 28 slide each other, it is possible to stabilize the initial characteristic. Not that the control plate 27 may be made of any material such as iron or resin.

The high friction material 28 is a ring-shaped member arranged between the control plate 27 and the thrust member 29, and a component of the hysteresis section 4 (refer to FIG. 2). The frictional coefficient of the high friction material 28 is defined to be higher than the frictional coefficients of the thrust member 23 and the low friction materials 25 and 26. The high friction material 28 is slidably pressed on the control plate 27 and the thrust member 29. The high friction material 28 does not slide relative to the control plate 27 or the thrust member 29 when a torsion is caused between the control plate 27 and the hub member 22 within a circumferentially movable range of the stopper portion 27a relative to the concave portion 22d, and slides relative to the control plate 27 or the thrust member 29 when the stopper portion 27a abuts to the circumferential end wall (radial wall) of the concave portion 22d and a torsion is further caused between the side plate 18 and the hub member 22. Note that the high friction material 28 may be configured to engage so as to be relatively unrotatable (may be fixed) relative to one of the control plate 27 and the thrust member 29, and to be slidable relative to the other one. Further, instead of locating the high friction material 28, processing (a thermal treatment, a surface treatment, or the like) for making the frictional coefficient of the sliding surface of the control plate 27 on the side of the thrust member 29 higher than the frictional coefficients of the thrust member 23 and the low friction materials 25 and 26, is performed, which makes it possible to omit the high friction material 28.

The thrust member 29 is a component of the hysteresis section 4, and is a ring-shaped member arranged between the side plate 18 and the high friction material 28. The thrust member 29 is made of resin. The frictional coefficient of the thrust member 29 is defined to be higher than the frictional coefficients of the low friction materials 25 and 26, and to be lower than the frictional coefficient of the high friction material 28. Note that the frictional coefficient of the thrust member 29 may be defined to be equal to the frictional coefficients of the low friction materials 25 and 26. The thrust member 29 is arranged axially between the disc spring 30 and the high friction material 28, and is biased towards the high friction material 28 by the disc spring 30, to be slidably pressed on the disc spring 30. The thrust member 29 does not slide relative to the high friction material 28 when a torsion is caused between the control plate 27 and the hub member 22 within a circumferentially movable range of the stopper portion 27a relative to the concave portion 22d, and slides relative to the high friction material 28 when the stopper portion 27a abuts to the circumferential end wall surface of the concave portion 22d and a torsion is further caused between the side plate 18 and the hub member 22. The thrust member 29 radially intervenes between the side plate 18 and the hub portion 22a as well. The thrust member 29 has a stopper portion 29a engaging to be relatively unrotatable and axially movable relative to the (radially-)inner circumferential end portion of the side plate 18. The thrust member 29 serves as a slide bearing (bush) for supporting the side plate 18 relatively rotatable relative to the hub portion 22a.

The disc spring 30 is a component of the hysteresis section 4, and a dish-shaped spring which is arranged between the thrust member 29 and the side plate 18 to bias the thrust member 29 towards the high friction material 28. The (radially-)inner circumferential end portion of the disc spring 30 engages so as to be relatively unrotatable and axially movable relative to the stopper portion 29a of the thrust member 29. The disc spring 30 biases the thrust member 29 towards the high friction material 28 and is supported by the side plate 18, thereby the thrust member 23, the control plate 24, the low friction material 25, the flange portion 22b, the low friction material 26, the control plate 27, the high friction material 28, and the thrust member 29 which are arranged in series between the side plates 17 and 18 are slidably pressed on one another adjacently.

Next, the operation of the hysteresis section of the torque fluctuation absorber according to Example 1 will be described.

In the hysteresis section 4, when a torsion (small torsion) is caused between the control plates 24 and 27 and the hub member 22 within a circumferentially movable range of the stopper portion 27a relative to the concave portion 22d, the low friction material 25 and the control plate 24 or the flange portion 22b slide relative to one another, and the low friction material 26 and the control plate 27 or the flange portion 22b slide relative to one another, that generates a small hysteresis torque. At that time, since the frictional coefficient between the thrust member 23 and the control plate 24 is higher than the frictional coefficient between the low friction material 25 and the control plate 24 or the flange portion 22b, the thrust member 23 and the control plate 24 do not slide relative to one another. Further, since the frictional coefficient between the high friction material 28 and the control plate 27 or the thrust member 29 is higher than the frictional coefficient between the low friction material 26 and the control plate 27 or the flange portion 22b, the high friction material 28 and the control plate 27 or the thrust member 29 do not slide relative to one another.

In the hysteresis section 4, when the stopper portion 27a abuts to the circumferential end wall (radial wall) of the concave portion 22d, and a torsion (large torsion) is further caused between the side plates 17 and 18 and the hub member 22, the thrust member 23 and the control plate 24 slide each other, and the high friction material 28 and the control plate 27 or the thrust member 29 slide each other, that generates a hysteresis torque greater than that in the case of small torsion. At that time, the low friction material 25 and the control plate 24 or the flange portion 22b do not slide each other, and the low friction material 26 and the control plate 27 or the flange portion 22b do not slide each other. Note that the frictional coefficient between the low friction material 25 and the control plate 24 or the flange portion 22b is lower than the frictional coefficient between the thrust member 23 and the control plate 24. However, since the stopper portion 27a abuts to the circumferential end wall (radial wall) of the concave portion 22d, which prevents (restricts) a torsion between the control plates 24 and 27 and the hub member 22, the thrust member 23 and the control plate 24 do not slide each other. Further, the frictional coefficient between the low friction material 26 and the control plate 27 or the flange portion 22b is lower than the frictional coefficient between the high friction material 28 and the control plate 27 or the thrust member 29. However, since the stopper portion 27a abuts to the circumferential end wall of the concave portion 22d, which prevents (restricts) a torsion between the control plates 24 and 27 and the hub member 22, the high friction material 28 and the control plate 27 or the thrust member 29 do not slide each other.

According to Example 1, it is possible to realize a structure in which a hysteresis torque changes according to a torsion angle by the one disc spring 30 in the hysteresis section 4, and to attempt to achieve a low cost and a shortening of its axial length. Further, since caulking is abolished, but the stopper portion 27a of the control plate 27 and the concave portion 24a of the control plate 24 are engaged with each other so as to be relatively unrotatable in order to couple the control plates 24 and 27 so as to be integrally rotatable, it is possible to reduce the number of components. Further, since the stopper portion 27a of the control plate 27 and the concave portion 24a of the control plate 24 are engaged with each other so as to be axially movable, even when the sliding surfaces of the thrust member 23, the control plate 24, the low friction material 25, the flange portion 22b, the low friction material 26, the control plate 27, the high friction material 28, and the thrust member 29 are worn away, it is possible to adjust a distance between the control plates 24 and 27, and one disc spring is sufficient to exert pressure onto them. Further, by the intermediary of the control plates 24 and 27, it is possible stabilize the sliding performance, and even when the sliding surfaces of the thrust member 23, the control plate 24, the low friction material 25, the flange portion 22b, the low friction material 26, the control plate 27, the high friction material 28, and the thrust member 29 are worn away, it is possible to improve the resilient to fatigue (or wear).

### [Example 2]

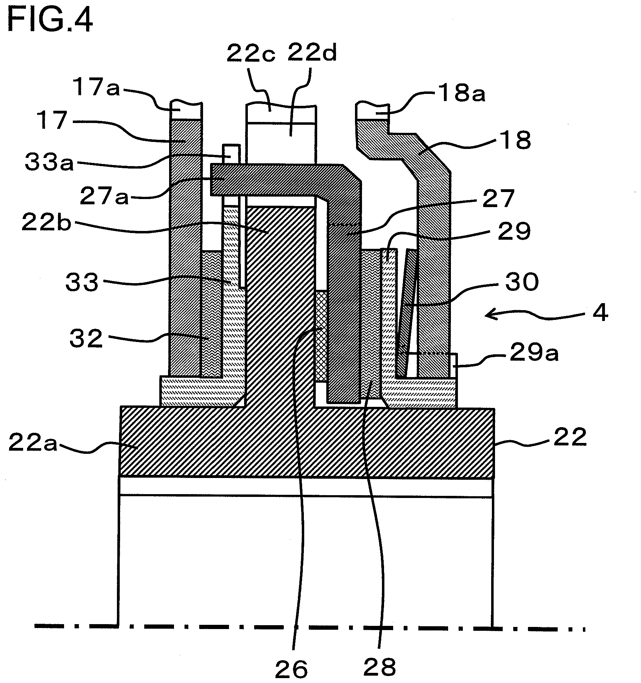

A torque fluctuation absorber according Example 2 will be described with reference to the drawings. FIG. 4 is an enlarged partial cross-sectional view schematically showing a structure of a hysteresis section in the torque fluctuation absorber according to Example 2.

Example 2 is a modified example of Example 1 (refer to FIG. 2), and only a high friction material 32 and a thrust member 33 are located between the side plate 17 and the flange portion 22b. The structure of the others is the same as that in Example 1.

The high friction material 32 is a ring-shaped member arranged between the side plate 17 and the thrust member 33, and a component of the hysteresis section 4. The frictional coefficient of the high friction material 32 is defined to be higher than the frictional coefficients of the thrust members 29 and 33 and the low friction material 26, and is defined to be equal to the frictional coefficient of the high friction material 28. The high friction material 32 is slidably pressed on the side plate 17 and the thrust member 33. The high friction material 32 does not slide relative to the side plate 17 or the thrust member 33 when a torsion is caused between the thrust member 33 and the hub member 22 within a circumferentially movable range of the stopper portion 27a relative to the concave portion 22d, and slides relative to the side plate 17 or the thrust member 33 when the stopper portion 27a abuts to the circumferential end wall (radial wall) of the concave portion 22d and a torsion is further caused between the side plate 17 and the hub member 22. The side plate 17 slidable relative to the high friction material 32 is preferably roughened onto its sliding surface relative to the high friction material 32 by a surface treatment, a thermal treatment, or the like. In this way, the high friction material 32 can be held by the side plate 17 when the high friction material 32 and the thrust member 33 slide each other, and even when the high friction material 32 and the side plate 17 slide each other, it is possible to stabilize the initial characteristic. Note that the high friction material 32 may be configured to engage so as to be relatively unrotatable (may be fixed) relative to one of the side plate 17 and the thrust member 33, and to be slidable relative to the other one. Further, instead of locating the high friction material 32, processing (a thermal treatment, a surface treatment, or the like) for making the frictional coefficient of the sliding surface of the side plate 17 on the side of the thrust member 33 higher than the frictional coefficients of the thrust member 33 and the low friction material 26, is performed, which makes it possible to omit the high friction material 32.

The thrust member 33 is a ring-shaped member arranged between the high friction material 32 and the flange portion 22b, and a component of the hysteresis section 4. The thrust member 33 is made of resin. The frictional coefficient of the thrust member 33 is defined to be higher than the frictional coefficient of the low friction material 26, and to be lower than the frictional coefficients of the high friction materials 28 and 32. Note that the frictional coefficient of the thrust member 33 may be defined to be equal to the frictional coefficient of the low friction material 26. The thrust member 33 is arranged axially between the high friction material 32 and the flange portion 22b, and is slidably pressed on the high friction material 32 and the flange portion 22b. An outer diameter of an area on which the thrust member 33 and the high friction material 32 are pressured on each other is greater than an outer diameter of an area on which the thrust member 33 and the flange portion 22b are pressured on each other. The (radially-)outer circumferential portion of the thrust member 33 is distanced from the flange portion 22b, and has a concave portion 33a engaging to be relatively unrotatable and axially movable relative to the stopper portion 27a of the control plate 27 in the vicinity of its (radially-)outer circumferential end portion. The thrust member 33 rotates along with the control plate 27, and is rotatable relative to the hub member 22 within a circumferentially movable range of the stopper portion 27a relative to the concave portion 22d, and is restricted (prevented) from rotating relative to the hub member 22 when the stopper portion 27a abuts to the circumferential surface of the concave portion 22d. The thrust member 33 slides relative to the flange portion 22b when a torsion is caused between the thrust member 33 and the hub member 22 within a circumferentially movable range of the stopper portion 27a relative to the concave portion 22d, and slides relative to the high friction material 32 when the stopper portion 27a abuts to the circumferential end wall (radial wall) of the concave portion 22d and a torsion is further caused between the side plate 17 and the hub member 22. The thrust member 33 radially intervenes between the side plate 17 and the hub portion 22a as well. The thrust member 33 serves as a slide bearing (bush) for supporting the side plate 17 relatively rotatable relative to the hub portion 22a.

Next, the operation of the hysteresis section of the torque fluctuation absorber according to Example 2 will be described.

In the hysteresis section 4, when a torsion (small torsion) is caused between the control plate and 27, the thrust member 33, and the hub member 22 within a circumferentially movable range of the stopper portion 27a relative to the concave portion 22d, the thrust member 33 and the flange portion 22b slide each other, and the low friction material 26 and the control plate 27 or the flange portion 22b slide each other, that generates a small hysteresis torque. At that time, since the frictional coefficient between the thrust member 33 and the high friction material 32 is higher than the frictional coefficient between the thrust member 33 and the flange portion 22b, the thrust member 33 and the high friction material 32 do not slide each other. Further, since the frictional coefficient between the high friction material 28 and the control plate 27 or the thrust member 29 is higher than the frictional coefficient between the low friction material 26 and the control plate 27 or the flange portion 22b, the high friction material 28 and the control plate 27 or the thrust member 29 do not slide each other.

In the hysteresis section 4, when the stopper portion 27a abuts to the circumferential end wall (radial wall) of the concave portion 22d, and a torsion (large torsion) is further caused between the side plates 17 and 18 and the hub member 22, the thrust member 33 or the side plate 17 and the high friction material 32 slide each other, and the high friction material 28 and the control plate 27 or the thrust member 29 slide each other, that generates a hysteresis torque greater than that in the case of small torsion. At that time, the thrust member 33 and the flange portion 22b do not slide each other, and the low friction material 26 and the control plate 27 or the flange portion 22b do not slide each other. Note that the frictional coefficient between the thrust member 33 and the flange portion 22b is lower than the frictional coefficient between the thrust member 33 and the high friction material 32. However, since the stopper portion 27a abuts to the circumferential end wall of the concave portion 22d, which prevents (restricts) a torsion between the thrust member 33 and the hub member 22, the thrust member 33 and the flange portion 22b do not slide each other. Further, since the frictional coefficient between the low friction material 26 and the control plate 27 or the flange portion 22b is lower than the frictional coefficient between the high friction material 28 and the control plate 27 or the thrust member 29. However, since the stopper portion 27a abuts to the circumferential end wall of the concave portion 22d, which prevents a torsion between the control plate 27 and the hub member 22, the high friction material 28 and the control plate 27 or the thrust member 29 do not slide each other.

According to Example 2, it is possible to realize a structure in which a hysteresis torque changes according to the torsion angle by the one disc spring 30 in the hysteresis section 4, and to attempt to achieve a low cost and a shortening of its axial length. Further, since the stopper portion 27a of the control plate 27 and the concave portion 33a of the thrust member 33 are engaged with each other so as to be relatively unrotatable, it is possible to reduce the number of components less than that in Example 1 and to attempt to achieve a shortening of its axial length. Further, since the stopper portion 27a of the control plate 27 and the concave portion 33a of the thrust member 33 are engaged with each other so as to be axially movable, even when the sliding surfaces of the high friction material 32, the thrust member 33, the flange portion 22b, the low friction material 26, the control plate 27, the high friction material 28, and the thrust member 29 are worn away, it is possible to adjust a distance between the control plates 24 and 27, and one disc spring is sufficient to exert pressure onto them. Since the metal and resin are engaged each other in the engaging portion between the control plate 27 and the thrust member 33, it is possible to prevent a sound of metal hitting each other (ticktock), which makes it possible to improve the noise vibrational characteristic. Further, since there is the high friction material 32 between the side plate 17 and the flange portion 22b, it is possible to increase a change in hysteresis torque value depending on the torsion angle.

### [Example 3]

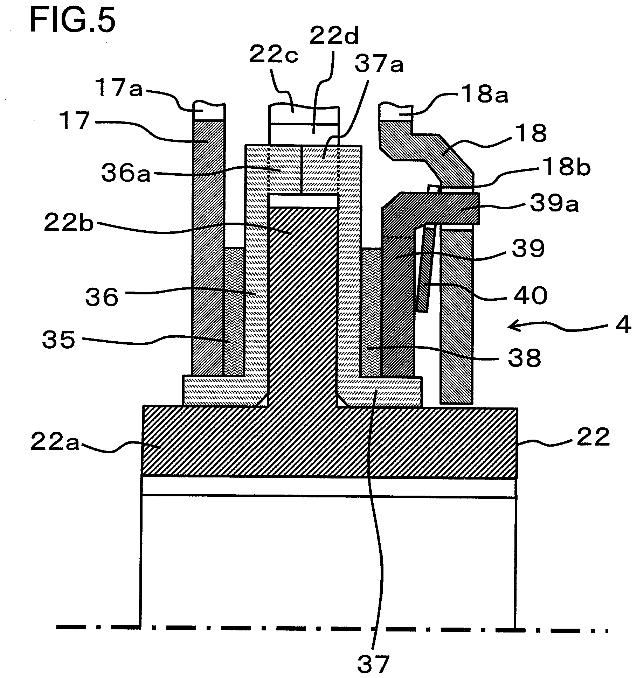

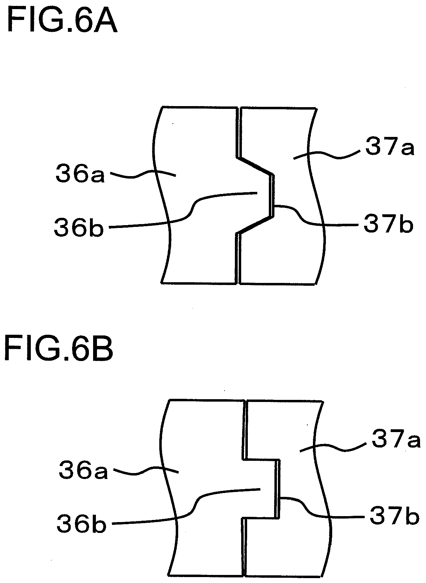

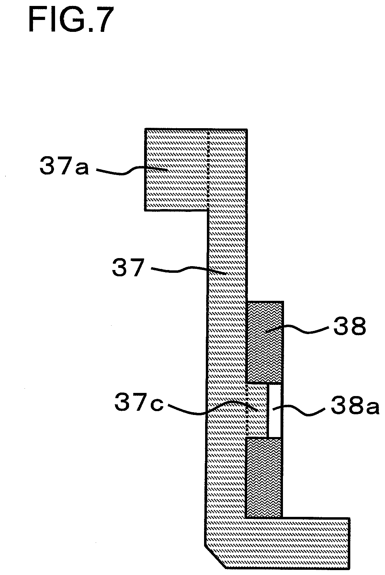

A torque fluctuation absorber according Example 3 will be described with reference to the drawings. FIG. 5 is an enlarged partial cross-sectional view schematically showing a structure of a hysteresis section in the torque fluctuation absorber according to Example 3. FIGs. 6 are enlarged partial plan views schematically showing an engaging state of thrust members in a modified example of the hysteresis section in the torque fluctuation absorber according to Example 3. FIG. 7 is an enlarged cross-sectional view schematically showing an engaging state between the thrust member and a high friction material in the modified example of the hysteresis section in the torque fluctuation absorber according to Example 3.

Example 3 is a modified example of Example 2 (refer to FIG. 4), and the control plate (reference numeral 27 in FIG. 4) is abolished to use, and stopper portions 36a and 37a are provided to thrust members 36 and 37. The torque fluctuation absorber according Example 3 has a high friction material 35, the thrust member 36, the thrust member 37, a high friction material 38, a pressure plate 39, and a disc spring (annular conical spring) 40 between the side plates 17 and 18 of the hysteresis section 4.

The high friction material 35 is a ring-shaped member arranged between the side plate 17 and the thrust member 33, and a component of the hysteresis section 4. The frictional coefficient of the high friction material 35 is defined to be higher than the frictional coefficients of the thrust members 36 and 37, and is defined to be equal to the frictional coefficient of the high friction material 38. The high friction material 35 is slidably pressed on the side plate 17 and the thrust member 36. The high friction material 35 does not slide relative to the side plate 17 or the thrust member 36 when a torsion is caused between the thrust member 36 and the hub member 22 within a circumferentially movable range of the stopper portion 36a relative to the concave portion 22d, and slides relative to the side plate 17 or the thrust member 36 when the stopper portion 36a abuts to the circumferential end wall (radial wall) of the concave portion 22d and a torsion is further caused between the side plate 17 and the hub member 22. The side plate 17 slidable relative to the high friction material 35 is preferably roughened onto its sliding surface relative to the high friction material 35 by a surface treatment, a thermal treatment, or the like. In this way, the high friction material 35 can be held by the side plate 17 when the high friction material 35 and the thrust member 36 slide each other, and even when the high friction material 35 and the side plate 17 slide each other, it is possible to stabilize the initial characteristic. Note that the high friction material 35 may be configured to engage so as to be relatively unrotatable (may be fixed) relative to one of the side plate 17 and the thrust member 36, and to be slidable relative to the other one. Further, instead of locating the high friction material 35, processing (a thermal treatment, a surface treatment, or the like) for making the frictional coefficient of the sliding surface of the side plate 17 on the side of the thrust member 36 higher than the frictional coefficient of the thrust member 36, is performed, which makes it possible to omit the high friction material 35.

The thrust member 36 is a ring-shaped member arranged between the high friction material 35 and the flange portion 22b, and a component of the hysteresis section 4. The thrust member 36 is made of resin. The frictional coefficient of the thrust member 36 is defined to be lower than the frictional coefficients of the high friction materials 35 and 38. The thrust member 36 is arranged axially between the high friction material 35 and the flange portion 22b, and is slidably pressed on the high friction material 35 and the flange portion 22b. The thrust member 36 has a stopper portion 36a extending towards the side plate 18 in the axial direction at its (radially-)outer circumferential end portion (i.e., at the radial end thereof). The stopper portion 36a is inserted in the concave portion 22d of the flange portion 22b so as to be not completely inserted to pass through it, and is circumferentially movable within a circumferential distance range of the concave portion 22d. That is, the stopper portion 36a allows the hub member 22 and the thrust member 36 to relatively rotate within a circumferentially movable range of the stopper portion 36a relative to the concave portion 22d, and restricts (prevents) the hub member 22 and the thrust member 36 from relatively rotating when the stopper portion 36a abuts to the circumferential end wall (radial wall) of the concave portion 22d. The thrust member 36 slides relative to the flange portion 22b when a torsion is caused between the thrust member 36 and the hub member 22 within a circumferentially movable range of the stopper portion 36a relative to the concave portion 22d, and slides relative to the high friction material 35 when the stopper portion 36a abuts to the circumferential end wall of the concave portion 22d and a torsion is further caused between the side plate 17 and the hub member 22. The thrust member 36 radially intervenes between the side plate 17, the high friction material 35, and the hub portion 22a as well. The thrust member 36 is relatively rotatable relative to the side plate 17, and serves as a slide bearing (bush) for supporting the side plate 17 relatively rotatable relative to the hub portion 22a.

The thrust member 37 is a ring-shaped member arranged between the high friction material 38 and the flange portion 22b, and a component of the hysteresis section 4. The thrust member 37 is made of resin. The frictional coefficient of the thrust member 37 is defined to be lower than the frictional coefficients of the high friction materials 35 and 38. The thrust member 37 is arranged axially between the high friction material 38 and the flange portion 22b, and is slidably pressed on the high friction material 38 and the flange portion 22b. The thrust member 37 has a stopper portion 37a extending towards the side plate 18 in the axial direction at its (radially-)outer circumferential end portion. The stopper portion 37a is inserted in the concave portion 22d of the flange portion 22b so as to be not completely inserted to pass through it, and is circumferentially movable within a circumferential distance range of the concave portion 22d. That is, the stopper portion 37a allows the hub member 22 and the thrust member 37 to relatively rotate within a circumferentially movable range of the stopper portion 37a relative to the concave portion 22d, and restricts (prevents) the hub member 22 and the thrust member 37 from relatively rotating when the stopper portion 37a abuts to the circumferential end wall (radial wall) of the concave portion 22d. The thrust member 37 slides relative to the flange portion 22b when a torsion is caused between the thrust member 37 and the hub member 22 within a circumferentially movable range of the stopper portion 37a relative to the concave portion 22d, and slides relative to the high friction material 35 when the stopper portion 37a abuts to the circumferential end wall of the concave portion 22d and a torsion is further caused between the side plate 18 and the hub member 22. It is not important whether the leading end of the stopper portion 37a comes into contact with the leading end of the stopper portion 36a of the thrust member 36 or not. However, in order for the thrust members 36 and 37 not to relatively rotate and to engage with each other, as shown in FIG. 6, the leading end of the stopper portion 37a preferably has a concave portion 37b engaging with a protruding portion 36b formed on the leading end of the stopper portion 36a of the thrust member 36. This is because it is possible to improve the strength between the thrust members 36 and 37 in this way. The (axial-) end surface (radially extending surfaces) of the protruding portion 36b and the concave portion 37b may be formed into tapered shapes engaging each other (refer to FIG. 6B). The thrust member 37 radially intervenes between the pressure plate 39, the high friction material 38, and the hub portion 22a as well. The thrust member 37 is relatively rotatable relative to the pressure plate 39 and the high friction material 38.

The high friction material 38 is a ring-shaped member arranged between the pressure plate 39 and the thrust member 37, and a component of the hysteresis section 4. The frictional coefficient of the high friction material 38 is defined to be higher than the frictional coefficients of the thrust members 36 and 37, and is defined to be equal to the frictional coefficient of the high friction material 35. The high friction material 38 is slidably pressed on the pressure plate 39 and the thrust member 37. The high friction material 38 does not slide relative to the pressure plate 39 or the thrust member 37 when a torsion is caused between the thrust member 37 and the hub member 22 within a circumferentially movable range of the stopper portion 37a relative to the concave portion 22d, and slides relative to the pressure plate 39 or the thrust member 36 when the stopper portion 37a abuts to the circumferential end wall of the concave portion 22d and a torsion is further caused between the side plate 18 and the hub member 22. The pressure plate 39 slidable relative to the high friction material 38 is preferably roughened onto its sliding surface relative to the high friction material 38 by a surface treatment, a thermal treatment, or the like. In this way, the high friction material 38 can be held by the pressure plate 39 when the high friction material 38 and the thrust member 37 slide each other, and even when the high friction material 38 and the pressure plate 39 slide each other, it is possible to stabilize the initial characteristic. Note that the high friction material 38 may be configured to engage so as to be relatively unrotatable (may be fixed) relative to one of the pressure plate 39 and the thrust member 37, and to be slidable relative to the other one. For example, as shown in FIG. 7, a convex portion 37c may be provided to the thrust member 37, and a hole portion 38a may be provided in the high friction material 38, and the convex portion 37c may be inserted into the hole portion 38a to cause the thrust member 37 and the high friction material 38 to engage with each other so as to be relatively unrotatable. Further, instead of locating the high friction material 38, processing (a thermal treatment, a surface treatment, or the like) for making the frictional coefficient of the sliding surface of the pressure plate 39 on the side of the thrust member 36 higher than the frictional coefficient of the thrust member 37, is performed, which makes it possible to omit the high friction material 38.

The pressure plate 39 is a ring-shaped member arranged between the disc spring 40 and the high friction material 38, and a component member of the hysteresis part 4. The pressure plate 39 has a stopper portion 39a for being supported so as to be relatively unrotatable and axially movable relative to the side plate 18. The stopper portion 39a is inserted into a hole portion 18b of the side plate 18 so as to be relatively unrotatable and axially movable. The pressure plate 39 is biased towards the high friction material 38 by the disc spring 40, and is slidably pressed on the high friction material 38 with its sliding surface.

The disc spring 40 is a component of the hysteresis section 4, and a dish-shaped spring (annular conical spring) which is arranged between the pressure plate 39 and the side plate 18 to bias the pressure plate 39 towards the high friction material 38. The (radially-)outer circumferential end portion of the disc spring 40 engages so as to be relatively unrotatable and axially movable relative to the stopper portion 39a of the pressure plate 39. The disc spring 40 biases the pressure plate 39 towards the high friction material 38 and is supported by the side plate 18, thereby the high friction material 35, the thrust member 36, the flange portion 22b, the thrust member 37, the high friction material 38, and the pressure plate 39 which are arranged in series between the side plates 17 and 18 are slidably pressed on each other adjacently.

The structure of the others is the same as that in Example 3.

Next, the operation of the hysteresis section of the torque fluctuation absorber according to Example 3 will be described.

In the hysteresis section 4, when a torsion (small torsion) is caused between the thrust members 36 and 37 and the hub member 22 within a circumferentially movable range of the stopper portions 36a and 37a relative to the concave portion 22d, the thrust members 36 and 37 and the flange portion 22b slide each other, that generates a small hysteresis torque. At that time, since the frictional coefficient between the thrust member 36 and the high friction material 35 is higher than the frictional coefficient between the thrust member 36 and the flange portion 22b, the thrust member 36 and the high friction material 35 do not slide each other. Further, since the frictional coefficient between the high friction material 38 and the pressure plate 39 or the thrust member 37 is higher than the frictional coefficient between the thrust member 37 and the flange portion 22b, the high friction material 38 and the pressure plate 39 or the thrust member 37 do not slide each other.

In the hysteresis section 4, when the stopper portions 36a and 37a abut to the circumferential end wall of the concave portion 22d, and a torsion (large torsion) is further caused between the side plates 17 and 18 and the hub member 22, the thrust member 36 or the side plate 17 and the high friction material 35 slide each other, and the high friction material 38 and the pressure plate 39 or the thrust member 37 slide each other, that generates a hysteresis torque greater than that in the case of small torsion. At that time, the thrust members 36 and 37 and the flange portion 22b do not slide each other. Note that the frictional coefficient between the thrust member 36 and the flange portion 22b is lower than the frictional coefficient between the thrust member 36 and the high friction material 35. However, since the stopper portion 36a abuts to the circumferential end wall of the concave portion 22d, which prevents (restricts) a torsion between the thrust member 36 and the hub member 22, the thrust member 36 and the flange portion 22b do not slide each other. Further, since the frictional coefficient between the thrust member 37 and the flange portion 22b is lower than the frictional coefficient between the high friction material 38 and the pressure plate 39 or the thrust member 37. However, since the stopper portion 37a abuts to the circumferential end wall of the concave portion 22d, which prevents (restricts) a torsion between the thrust member 37 and the hub member 22, the high friction material 38 and the pressure plate 39 or the thrust member 37 do not slide each other.

According to Example 3, it is possible to realize a structure in which a hysteresis torque changes depending on the torsion angle by the one disc spring 40 in the hysteresis section 4, and to attempt to achieve a low cost and a shortening of its axial length. Further, since the stopper portions 36a and 37a of the thrust members 36 and 37 and the concave portion 22d of the flange portion 22 are engaged with each other so as to be relatively unrotatable, it is possible to reduce the number of components less than that in Example 2. Further, since the stopper portions 36a and 37a of the thrust members 36 and 37 engage with the concave portion 22d of the flange portion 22b so as to be axially movable, even when the sliding surfaces of the high friction material 35, the thrust member 36, the flange portion 22b, the thrust member 37, the high friction material 38, and the pressure plate 39 are worn away, it is possible to adjust a distance between the thrust members 36 and 37, and one disc spring is sufficient to exert pressure onto them. Since the stopper portions 36a and 37a of the thrust members 36 and 37 are made of resin, it is possible to prevent a sound of metal hitting each other (ticktock), which makes it possible to improve the noise vibrational characteristic. Further, since there are the high friction materials 35 and 38 between the side plates 17 and 18 and the flange portion 22b, it is possible to increase change in hysteresis torque value according to the torsion angle. Further, since the thrust members 36 and 17 are symmetric and the high friction materials 35 and 38 as well are symmetric, it is possible to reduce the manufacturing cost by using the components in common.

### [Example 4]

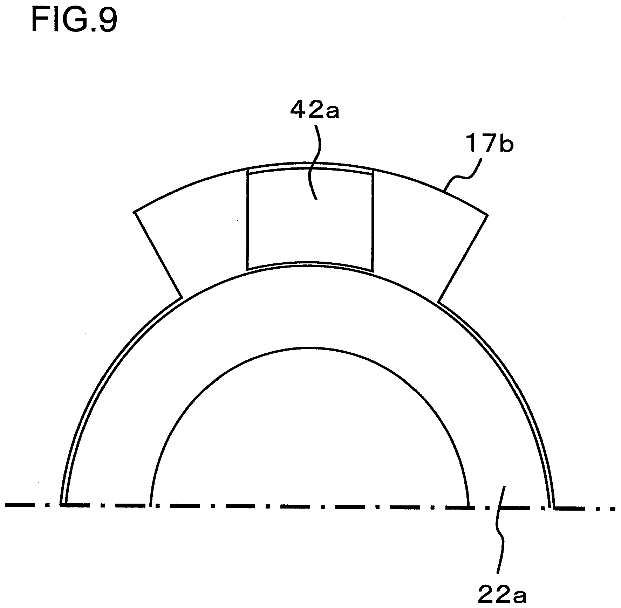

A torque fluctuation absorber according Example 4 will be described with reference to the drawings. FIG. 8 is an enlarged partial cross-sectional view schematically showing a structure of a hysteresis section in the torque fluctuation absorber according to Example 4. FIG. 9 is an enlarged partial plan view schematically showing an engaging state between a thrust member and a side plate of the hysteresis section in the torque fluctuation absorber according to Example 4.

Example 4 is a modified example of Example 3 (refer to FIG. 5), and a stopper portion 42a is provided to a thrust member 42, a concave portion 17b is provided in the side plate 17, and the stopper portion 42a is made circumferentially movable within a circumferential distance range of the concave portion 17b. The torque fluctuation absorber according to Example 4 has the thrust member 42, a high friction material 43, a thrust member 44, and a disc spring (annular conical spring) 45 between the side plates 17 and 18 of the hysteresis section 4.

The thrust member 42 is a ring-shaped member arranged between the side plate 17 and the high friction material 43, and a component of the hysteresis section 4. The thrust member 42 is made of resin. The frictional coefficient of the thrust member 42 is defined to be lower than the frictional coefficient of the high friction material 43, and is defined to be equal to the frictional coefficient of the thrust member 44. The thrust member 42 is arranged axially between the side plate 17 and the high friction material 43, and is slidably pressed on the side plate 17 and the high friction material 43. The thrust member 42 has the stopper portion 42a extending towards the side plate 17 in the axial direction at its (radially-)inner circumferential end portion. The stopper portion 42a is inserted in the concave portion 17b formed in the (radially-)inner circumferential end portion of the side plate 17, and is circumferentially movable within a circumferential distance range of the concave portion 17b. That is, the stopper portion 42a allows the side plate 17 and the thrust member 42 to relatively rotate within a circumferentially movable range thereof relative to the concave portion 17b, and restricts (prevents) the side plate 17 and the thrust member 42 from relatively rotating when the stopper portion 42a abuts to the circumferential end wall of the concave portion 17b. The thrust member 42 slides relative to the side plate 17 when a torsion is caused between the thrust member 42 and the side plate 17 within a circumferentially movable range of the stopper portion 42a relative to the concave portion 17b, and slides relative to the high friction material 43 when the stopper portion 42a abuts to the circumferential end wall of the concave portion 17b and a torsion is further caused between the side plate 17 and the hub member 22.

The high friction material 43 is a ring-shaped member arranged between the flange portion 22b and the thrust member 42, and a component of the hysteresis section 4. The frictional coefficient of the high friction material 43 is defined to be higher than the frictional coefficients of the thrust members 42 and 44, and the high friction material 43 is slidably pressed on the flange portion 22b and the thrust member 42. The high friction material 43 does not slide relative to the thrust member 42 or the flange portion 22b when a torsion is caused between the thrust member 42 and the side plate 17 within a circumferentially movable range of the stopper portion 42a relative to the concave portion 17b, and slides relative to the thrust member 42 or the flange portion 22b when the stopper portion 42a abuts to the circumferential end wall of the concave portion 17b and a torsion is further caused between the side plate 17 and the hub member 22. The flange portion 22b slidable relative to the high friction material 43 is preferably roughened onto its sliding surface relative to the high friction material 43 by a surface treatment, a thermal treatment, or the like. In this way, the high friction material 35 can be held by the flange portion 22b when the high friction material 43 and the thrust member 42 slide each other, and even when the high friction material 43 and the flange portion 22b slide each other, it is possible to stabilize the initial characteristic. Note that the high friction material 43 may be configured to engage so as to be relatively unrotatable (may be fixed) relative to one of the flange portion 22b and the thrust member 42, and to be slidable relative to the other one. Further, instead of locating the high friction material 43, processing (a thermal treatment, a surface treatment, or the like) for making the frictional coefficient of the sliding surface of the flange portion 22b on the side of the thrust member 42 higher than the frictional coefficient of the thrust member 42, is performed, which makes it possible to omit the high friction material 43.

The thrust member 44 is a component of the hysteresis section 4, and a ring-shaped member arranged between the side plate 18 and the flange portion 22b. The thrust member 44 is made of resin. The frictional coefficient of the thrust member 44 is defined to be lower than the frictional coefficient of the high friction material 43, and defined to be equal to the frictional coefficient of the thrust member 42. The thrust member 44 is arranged axially between the disc spring 45 and the flange portion 22b, and is biased towards the flange portion 22b by the disc spring 45, to be slidably pressed on the flange portion 22b. The thrust member 44 radially intervenes between the side plate 18 and the hub portion 22a as well. The thrust member 44 has a stopper portion 44a engaging to be relatively unrotatable and axially movable relative to the (radially-)inner circumferential end portion of the side plate 18. The thrust member 44 serves as a slide bearing (bush) for supporting the side plate 18 relatively rotatable relative to the hub portion 22a.

The disc spring 45 is a component of the hysteresis section 4, and a dish-shaped spring which is arranged between the thrust member 44 and the side plate 18 to bias the thrust member 44 towards the flange portion 22b. The (radially-)inner circumferential end portion of the disc spring 45 engages so as to be relatively unrotatable and axially movable relative to the stopper portion 44a of the thrust member 44. The disc spring 45 biases the thrust member 44 towards the flange portion 22b and is supported by the side plate 18, whereby the thrust member 42, the high friction material 43, the thrust member 36, the flange portion 22b, the thrust member 37, the flange portion 22b, and the thrust member 44 which are arranged in series between the side plates 17 and 18 are slidably pressed on each other adjacently.

The structure of the others is the same as that in Example 1.

Next, the operation of the hysteresis section of the torque fluctuation absorber according to Example 4 will be described.

In the hysteresis section 4, when a torsion (small torsion) is caused between the thrust member 42 and the side plate 17 within a circumferentially movable range of the stopper portion 42a relative to the concave portion 17b, the thrust member 42 and the side plate 17 slide each other, and the thrust member 42 and the flange portion 22b slide each other, that generates a small hysteresis torque. At that time, since the frictional coefficient between the thrust member 42 or the flange portion 22b and the high friction material 43 is higher than the frictional coefficient between the thrust member 42 and the side plate 17, the thrust member 42 and the high friction material 43 do not slide each other.

In the hysteresis section 4, when the stopper portion 42a abuts to the circumferential end wall of the concave portion 17b, and a torsion (large torsion) is further caused between the side plates 17 and 18 and the hub member 22, the thrust member 42 or the flange portion 22b and the high friction material 43 slide each other, and the flange portion 22b and the thrust member 44 slide each other, that generates a hysteresis torque greater than that in the case of small torsion. At that time, the thrust member 42 and the side plate 17 do not slide each other. Note that the frictional coefficient between the thrust member 42 and the side plate 17 is lower than the frictional coefficient between the thrust member 42 and the high friction material 43. However, since the stopper portion 42a abuts to the circumferential end wall of the concave portion 17b, which prevents (restricts) a torsion between the thrust member 42 and the side plate 17, the thrust member 42 and the side plate 17 do not slide each other.

According to Example 4, in the hysteresis section 4, it is possible to realize a structure in which a hysteresis torque changes according to the torsion angle by the one disc spring 45, and to attempt to achieve a low cost and a shortening of its axial length. Further, since the stopper portion 42a of the thrust member 42 and the concave portion 17b of the side plate 17 are engaged with each other so as to be relatively unrotatable, it is possible to reduce the number of components. Further, since the stopper portion 42a of the thrust member 42 engages with the concave portion 17b of the side plate 17 so as to be axially movable, even when the sliding surfaces of the thrust member 42, the high friction material 43, the flange portion 22b, and the thrust member 44 are worn away, it is possible to adjust a distance between the thrust members 42 and 44, and one disc spring is sufficient to exert pressure onto them. Since the stopper portion 42a of the thrust member 42 is made of resin, it is possible to prevent a sound of metal hitting each other (ticktock), which makes it possible to improve the noise vibrational characteristic.

### [Example 5]

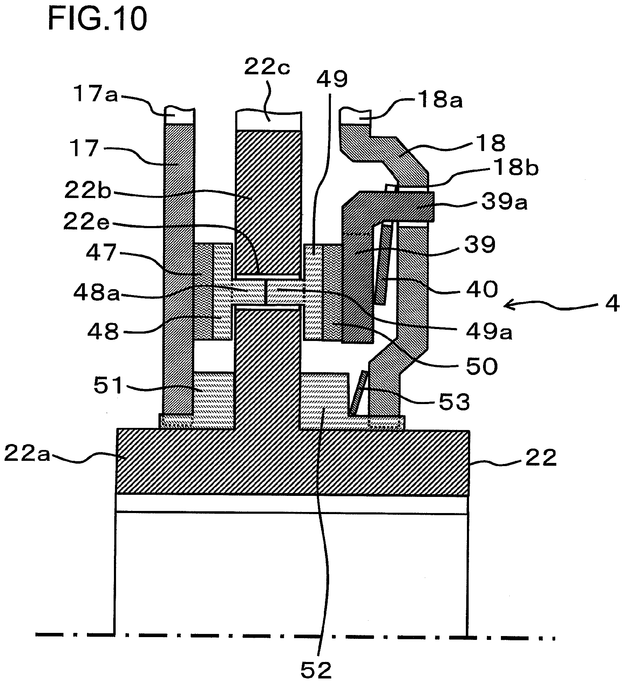

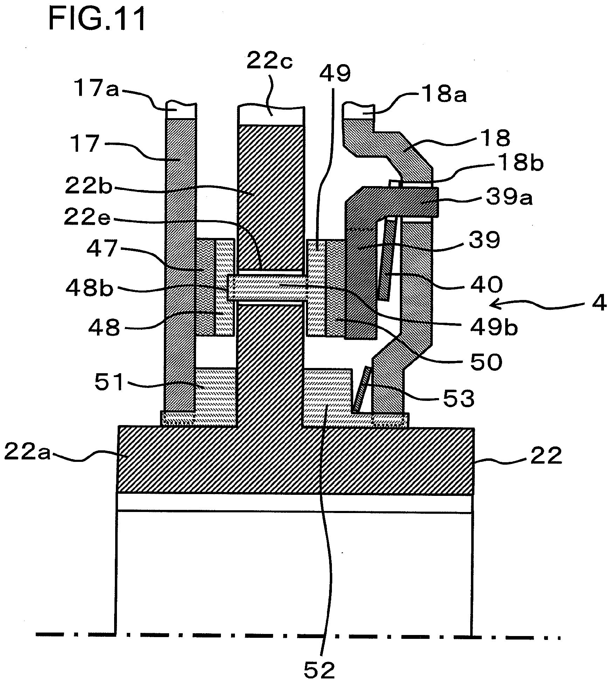

A torque fluctuation absorber according to Example 5 will be described with reference to the drawings. FIG. 10 is an enlarged partial cross-sectional view schematically showing a structure of a hysteresis section in the torque fluctuation absorber according to Example 5. FIG. 11 is an enlarged partial cross-sectional view schematically showing a structure as a modified example of the hysteresis section in the torque fluctuation absorber according to Example 5.

Example 5 is a modified example of Example 3 (refer to FIG. 5), and a first hysteresis section (a portion including reference numerals 47, 48, 49, 50, 39, and 40) in which a hysteresis torque changes according to a torsion angle is located on the (radially-)outer circumferential side, and a second hysteresis section (a portion including reference numerals 51, 52, and 53) in which a hysteresis torque does not change according to a torsion angle is located on the (radially-)inner circumferential side. The torque fluctuation absorber according to Example 5 has a high friction material 47, a thrust member 48, a thrust member 49, a high friction material 50, the pressure plate 39, the disc spring 40, thrust members 51 and 52, and a disc spring 53 between the side plates 17 and 18 of the hysteresis section 4. Note that the pressure plate 39 and the disc spring 40 are the same as the pressure plate (reference numeral 39 in FIG. 5) and the disc spring (reference numeral 40 in FIG. 5) in Example 3.

The high friction material 47 is a ring-shaped member arranged between the side plate 17 and the thrust member 48, and a component of the hysteresis section 4. The frictional coefficient of the high friction material 47 is defined to be higher than the frictional coefficients of the thrust members 48 and 49, and defined to be equal to the frictional coefficient of the high friction material 50. The high friction material 47 is slidably pressed on the side plate 17 and the thrust member 48. The high friction material 47 does not slide relative to the side plate 17 or the thrust member 48 when a torsion is caused between the thrust member 48 and the hub member 22 within a circumferentially movable range of a stopper portion 48a relative to a hole portion 22e formed in the flange portion 22b, and slides relative to the side plate 17 or the thrust member 48 when the stopper portion 48a abuts to the circumferential end wall of the hole portion 22e and a torsion is further caused between the side plate 17 and the hub member 22. The side plate 17 slidable relative to the high friction material 47 is preferably roughened onto its sliding surface relative to the high friction material 47 by a surface treatment, a thermal treatment, or the like. In this way, the high friction material 47 can be held by the side plate 17 when the high friction material 47 and the thrust member 48 slide each other, and even when the high friction material 47 and the side plate 17 slide each other, it is possible to stabilize the initial characteristic. Note that the high friction material 47 may be configured to engage so as to be relatively unrotatable (may be fixed) relative to one of the side plate 17 and the thrust member 48, and to be slidable relative to the other one. Further, instead of locating the high friction material 47, processing (a thermal treatment, a surface treatment, or the like) for making the frictional coefficient of the sliding surface of the side plate 17 on the side of the thrust member 48 higher than the frictional coefficient of the thrust member 48, is performed, which makes it possible to omit the high friction material 47.

The thrust member 48 is a ring-shaped member arranged between the high friction material 47 and the flange portion 22b, and a component of the hysteresis section 4. The thrust member 48 is made of resin. The frictional coefficient of the thrust member 48 is defined to be lower than the frictional coefficients of the high friction materials 47 and 50. The thrust member 48 is arranged axially between the high friction material 47 and the flange portion 22b, and is slidably pressed on the high friction material 47 (may be pressed on the flange portion 22b). The thrust member 48 has the stopper portion 48a extending towards the side plate 18 in the axial direction with at its intermediate portion. The stopper portion 48a is inserted in the hole portion 22e formed in the flange portion 22b so as to be not completely inserted to pass through it, and is circumferentially movable within a circumferential distance range of the hole portion 22e. That is, the stopper portion 48a allows the hub member 22 and the thrust member 48 to relatively rotate within a circumferentially movable range thereof relative to the hole portion 22e, and restricts (prefents) the hub member 22 and the thrust member 48 from relatively rotating when the stopper portion 48a abuts to the circumferential end wall of the hole portion 22e. The thrust member 48 relatively rotates (may slide) relative to the flange portion 22b when a torsion is caused between the thrust member 48 and the hub member 22 within a circumferentially movable range of the stopper portion 48a relative to the hole portion 22e, and slides relative to the high friction material 47 when the stopper portion 48a abuts to the circumferential end wall of the hole portion 22e and a torsion is further caused between the side plate 17 and the hub member 22.

The thrust member 49 is a ring-shaped member arranged between the high friction material 50 and the flange portion 22b, and a component of the hysteresis section 4. The thrust member 49 is made of resin. The frictional coefficient of the thrust member 49 is defined to be lower than the frictional coefficients of the high friction materials 47 and 50. The thrust member 49 is arranged axially between the high friction material 50 and the flange portion 22b, and is slidably pressed on the high friction material 50 (may be pressured to contact the flange portion 22b). The thrust member 49 has a stopper portion 49a extending towards the side plate 18 in the axial direction at its intermediate portion. The stopper portion 49a is inserted in the hole portion 22e formed in the flange portion 22b so as to be not completely inserted to pass through it, and is circumferentially movable within a circumferential distance range of the hole portion 22e. That is, the stopper portion 49a allows the hub member 22 and the thrust member 49 to relatively rotate within a circumferentially movable range thereof relative to the hole portion 22e, and restricts (prevents) the hub member 22 and the thrust member 49 from relatively rotating when the stopper portion 49a abuts to the circumferential end wall of the hole portion 22e. The thrust member 49 relatively rotates (may slide) relative to the flange portion 22b when a torsion is caused between the thrust member 49 and the hub member 22 within a circumferentially movable range of the stopper portion 49a relative to the hole portion 22e, and slides relative to the high friction material 50 when the stopper portion 49a abuts to the circumferential end wall of the hole portion 22e and a torsion is further caused between the side plate 18 and the hub member 22. It is not important whether the leading end of the stopper portion 49a comes into contact with the leading end of the stopper portion 48a of the thrust member 48 or not. In order for the thrust members 48 and 49 not to relatively rotate, to engage with each other, in the same way in the case shown in FIG. 6, the leading end of the stopper portion 49a preferably has a concave portion engaging with a protruding portion formed on the leading end of the stopper portion 48a of the thrust member 48. This is because it is possible to improve the strength between the thrust members 48 and 49 in this way. Further, as shown in FIG. 11, no stopper portion may be provided to the thrust member 48, a concave portion 48b may be provided in the thrust member 48, and the stopper portion 49a of the thrust member 49 may be engaged with the concave portion 48b so as to be relatively unrotatable.

The high friction material 50 is a ring-shaped member arranged between the pressure plate 39 and the thrust member 49, and a component of the hysteresis section 4. The frictional coefficient of the high friction material 50 is defined to be higher than the frictional coefficients of the thrust members 48 and 49, and is defined to be equal to the frictional coefficient of the high friction material 47. The high friction material 50 is slidably pressed on the pressure plate 39 and the thrust member 49. The high friction material 50 does not slide relative to the pressure plate 39 or the thrust member 49 when a torsion is caused between the thrust member 49 and the hub member 22 within a circumferentially movable range of the stopper portion 49a relative to the hole portion 22e, and slides relative to the pressure plate 39 or the thrust member 49 when the stopper portion 49a abuts to the circumferential end wall of the hole portion 22e and a torsion is further caused between the side plate 18 and the hub member 22. The pressure plate 39 slidable relative to the high friction material 50 is preferably roughened onto its sliding surface relative to the high friction material 50 by a surface treatment, a thermal treatment, or the like. In this way, the high friction material 50 can be held by the pressure plate 39 when the high friction material 50 and the thrust member 49 slide each other, and even when the high friction material 50 and the pressure plate 39 slide each other, it is possible to stabilize the initial characteristic. Note that the high friction material 50 may be configured to engage so as to be relatively unrotatable (may be fixed) relative to one of the pressure plate 39 and the thrust member 49, and to be slidable relative to the other one. Further, instead of locating the high friction material 50, processing (a thermal treatment, a surface treatment, or the like) for making the frictional coefficient of the sliding surface of the pressure plate 39 on the side of the thrust member 36 higher than the frictional coefficient of the thrust member 49, is performed, which makes it possible to omit the high friction material 50.

The thrust member 51 is a component of the hysteresis section 4, and a ring-shaped member arranged between the side plate 17 and the hub member 22. The thrust member 51 is arranged between the side plate 17 and the flange portion 22b, and engages with the side plate 17 so as to be relatively unrotatable and axially movable, and is slidably pressed on the flange portion 22b. The thrust member 51 is arranged on the (radially-)inner circumferential side from the high friction material 47, the thrust member 48, the thrust member 49, the high friction material 50, the pressure plate 39, and the disc spring 40.

The thrust member 52 is a component of the hysteresis section 4, and a ring-shaped member arranged between the side plate 18 and the hub member 22. The thrust member 52 is arranged between the disc spring 53 and the flange portion 22b, and engages with the side plate 18 so as to be relatively unrotatable and axially movable, and is biased towards the flange portion 22b by the disc spring 53, to be slidably pressed on the flange portion 22b. The thrust member 52 is arranged on the (radially-)inner circumferential side from the high friction material 47, the thrust member 48, the thrust member 49, the high friction material 50, the pressure plate 39, and the disc spring 40.

The disc spring 53 is a component of the hysteresis section 4, and a dish-shaped spring which is arranged between the thrust member 52 and the side plate 18 to bias the thrust member 52 towards the flange portion 22b. The disc spring 53 is arranged on the (radially-)inner circumferential side from the high friction material 47, the thrust member 48, the thrust member 49, the high friction material 50, the pressure plate 39, and the disc spring 40. The disc spring 53 biases the thrust member 52 towards the flange portion 22b and is supported by the side plate 18, thereby the thrust member 51, the flange portion 22b, and the thrust member 52 which are arranged in series between the side plates 17 and 18 are slidably pressed on each other adjacently.

The structure of the others is the same as that in Example 1.

Next, the operation of the hysteresis section of the torque fluctuation absorber according to Example 5 will be described.

In the first hysteresis section (the portion including reference numerals 47, 48, 49, 50, 39, and 40) on the (radially-)outer circumferential side of the hysteresis section 4, when a torsion (small torsion) is caused between the thrust members 48 and 49 and the hub member 22 within a circumferentially movable range of the stopper portions 48a and 49a relative to the hole portion 22e, the thrust members 48 and 49 and the flange portion 22b slide each other, that generates a small hysteresis torque. At that time, since the frictional coefficient between the thrust member 48 or the side plate 17 and the high friction material 47 is higher than the frictional coefficient between the thrust member 48 and the flange portion 22b, the thrust member 48 or the side plate 17 and the high friction material 47 do not slide each other. Further, since the frictional coefficient between the high friction material 50 and the pressure plate 39 or the thrust member 49 is higher than the frictional coefficient between the thrust member 49 and the flange portion 22b, the high friction material 50 and the pressure plate 39 or the thrust member 49 do not slide each other.

In the first hysteresis section (the portion including reference numerals 47, 48, 49, 50, 39, and 40) on the (radially-)outer circumferential side of the hysteresis section 4, when the stopper portions 48a and 49a abuts to the circumferential end wall of the hole portion 22e, and a torsion (large torsion) is further caused between the side plates 17 and 18 and the hub member 22, the thrust member 48 or the side plate 17 and the high friction material 47 slide each other, and the high friction material 50 and the pressure plate 39 or the thrust member 49 slide each other, that generates a hysteresis torque greater than that in the case of small torsion. At that time, the thrust members 48 and 49 and the flange portion 22b do not slide each other. Note that the frictional coefficient between the thrust member 48 and the flange portion 22b is lower than the frictional coefficient between the thrust member 48 and the high friction material 47. However, since the stopper portion 36a abuts to the circumferential end wall of the hole portion 22e, which prevents (restricts) a torsion between the thrust member 48 and the hub member 22, the thrust member 48 and the flange portion 22b do not slide each other. Further, since the frictional coefficient between the thrust member 49 and the flange portion 22b is lower than the frictional coefficient between the high friction material 50 and the pressure plate 39 or the thrust member 49. However, since the stopper portion 49a abuts to the circumferential end wall of the hole portion 22e, which prevents (restricts) a torsion between the thrust member 49 and the hub member 22, the thrust member 49 and the flange portion 22b do not slide each other.

Note that, in the second hysteresis section (the portion including reference numerals 51, 52, and 53) on the (radially-)inner circumferential side of the hysteresis section 4, the thrust members 51 and 52 and the flange portion 22b slide each other regardless of a torsion angle between the side plates 17 and 18 and the hub member 22, thereby causing no change of the hysteresis torque. However, since the second hysteresis section (the portion including reference numerals 51, 52, and 53) is arranged on the (radially-)inner circumferential side from the first hysteresis section (the portion including reference numerals 47, 48, 49, 50, 39, and 40), the hysteresis torque when the thrust members 51 and 52 and the flange portion 22b slide each other is smaller than the hysteresis torque when the thrust members 48 and 49 and the flange portion 22b slide each other.

According to Example 5, since the first hysteresis section (the portion including reference numerals 47, 48, 49, 50, 39, and 40) and the second hysteresis section (the portion including reference numerals 51, 52, and 53) radially sectioned in the hysteresis section 4, it is possible to attempt to achieve a downsizing thereof axially. Further, since the respective spring loads by the disc spring 40 and the disc spring 53 can be changed, the design freedom for the hysteresis characteristic in the hysteresis section 4 is increased. Further, with regards to the first hysteresis section (the portion including reference numerals 47, 48, 49, 50, 39, and 40) of the hysteresis section 4, it is possible to realize a structure in which a hysteresis torque changes according to a torsion angle by the one disc spring 40, and to attempt to achieve a low cost and a shortening of its axial length. Further, since the stopper portions 48a and 49a of the thrust members 48 and 49 and the hole portion 22e of the flange portion 22b are engaged with each other so as to be relatively unrotatable, it is possible to reduce the number of components. Further, since the stopper portions 48a and 49a of the thrust members 48 and 49 engage with the hole portion 22e of the flange portion 22b so as to be axially movable, even when the sliding surfaces of the high friction material 47, the thrust member 48, the flange portion 22b, the thrust member 49, the high friction material 50, and the pressure plate 39 are worn away, it is possible to adjust a distance between the thrust members 48 and 49, and one disc spring is sufficient to pressure onto them. Since the stopper portions 48a and 49a of the thrust members 48 and 49 are made of resin, it is possible to prevent a sound of metal hitting each other (ticktock), which makes it possible to improve the noise vibrational characteristic. Further, since there are the high friction materials 47 and 50 between the side plates 17 and 18 and the flange portion 22b as well, it is possible to increase a change in hysteresis torque value according to a torsion angle. Further, since the thrust members 48 and 49 are symmetric and the high friction materials 47 and 50 as well are symmetric, it is possible to reduce the manufacturing cost by using the components in common.

### [Example 6]

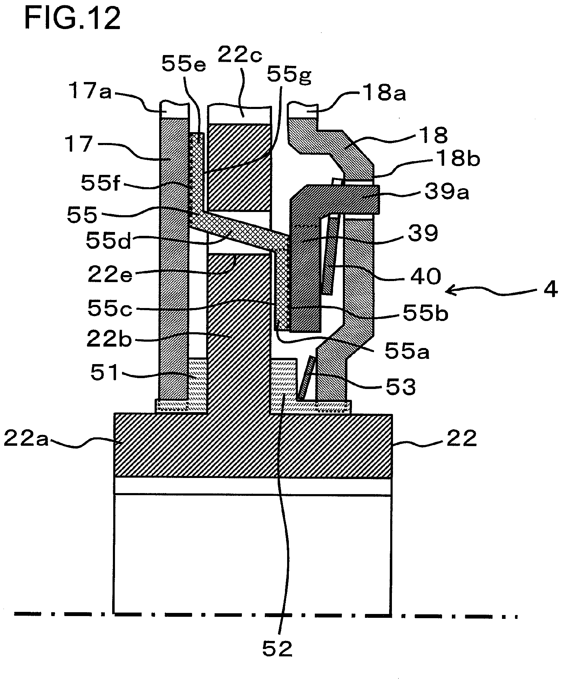

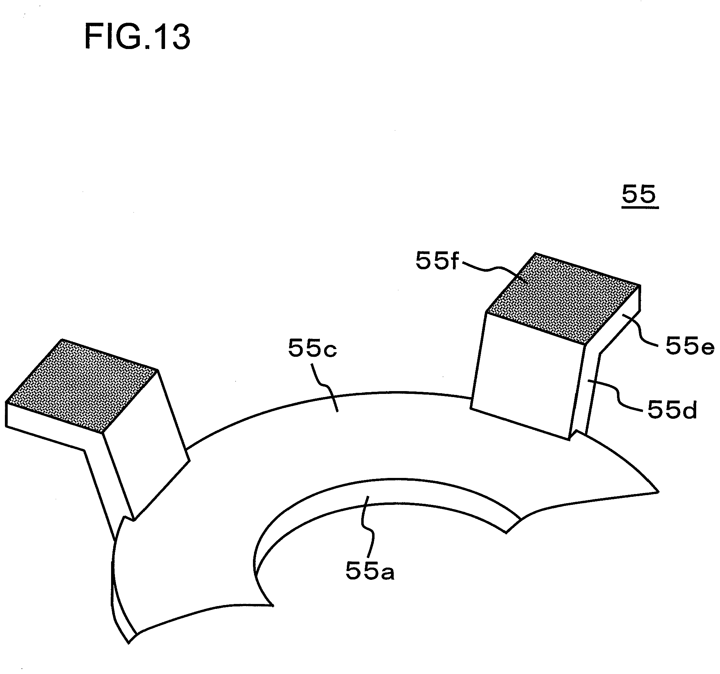

A torque fluctuation absorber according Example 6 will be described with reference to the drawings. FIG. 12 is an enlarged partial cross-sectional view schematically showing a structure of a hysteresis section in the torque fluctuation absorber according to Example 6. FIG. 13 is a partial perspective view schematically showing a structure of a friction member of the hysteresis section in the torque fluctuation absorber according to Example 6.

Example 6 is a modified example of Example 5 (refer to FIG. 10), and a first hysteresis section (a portion including reference numerals 55, 39, and 40) in which a hysteresis torque changes according to a torsion angle is located on the (radially-)outer circumferential side, and a second hysteresis section (a portion including reference numerals 51, 52, and 53) in which a hysteresis torque does not change according to a torsion angle is located on the (radially-)inner circumferential side. The torque fluctuation absorber according to Example 6 has a friction member 55, the pressure plate 39, the disc spring 40, thrust members 51 and 52, and the disc spring 53 between the side plates 17 and 18 of the hysteresis section 4. Note that the pressure plate 39 and the disc spring 40 are the same as the pressure plate (reference numeral 39 in FIG. 5), the disc spring (reference numeral 40 in FIG. 5) in Example 3. Further, the thrust members 51 and 52 and the disc spring 53 are the same as the thrust members (reference numerals 51 and 52 in FIG. 10) and the disc spring (reference numeral 53 in FIG. 10) in Example 5.

The friction member 55 is a ring-shaped member arranged between the side plate 17 and the flange portion 22b and between the pressure plate 39 and the flange portion 22b, and a component of the hysteresis section 4. An elastically-deformable (resilient) material is used for the friction member 55. The friction member 55 has a ring-shaped ring portion 55a at its (radially-)inner circumferential portion, and has a stopper portion 55d extending towards the side plate 17 at a predetermined position of the (radially-)outer circumferential portion of the ring portion 55a (a position corresponding to the hole portion 22e) on the (radially-)outer circumferential end portion of the ring portion 55a, and has an (radially-)outer circumferential extension portion 55e extending towards the (radially-)outer circumferential side on the leading end of the stopper portion 55d. The ring portion 55a is arranged between the pressure plate 39 and the flange portion 22b, and is slidably pressed on the pressure plate 39 (may be pressed on the flange portion 22b). The surface of the ring portion 55a on the side of the pressure plate 39 is a high friction surface 55b onto which processing (a thermal treatment, a surface treatment, or the like) for making its frictional coefficient higher than that of a low friction surface 55c is performed. The surface of the ring portion 55a on the side of the flange portion 22b is the low friction surface 55c onto which processing (a thermal treatment, a surface treatment, or the like) for making its frictional coefficient lower than that of the high friction surface 55b is performed. The stopper portion 55d is inserted into the hole portion 22e formed in the flange portion 22b, and is circumferentially movable within a circumferential distance range of the hole portion 22e. That is, the stopper portion 55d allows the hub member 22 and the friction member 55 to relatively rotate within a circumferentially movable range thereof relative to the hole portion 22e, and restricts (prevents) the hub member 22 and the friction member 55 from relatively rotating when the stopper portion 55d abuts to the circumferential end wall of the hole portion 22e. The (radially-)outer circumferential extension portion 55e is arranged between the side plate 17 and the flange portion 22b on the (radially-)outer circumferential side from the ring portion 55a, and is slidably pressed on the side plate 17 (may be pressured to contact the flange portion 22b). The surface of the (radially-)outer circumferential extension portion 55e on the side of the side plate 17 is a high friction surface 55f onto which processing (a thermal treatment, a surface treatment, or the like) for making its frictional coefficient higher than that of a low friction surface 55g is performed. The surface of the (radially-)outer circumferential extension portion 55e on the side of the flange portion 22b is the low friction surface 55g onto which processing (a thermal treatment, a surface treatment, or the like) for making its frictional coefficient higher than that of the high friction surface 55f is performed. Note that the high friction surface 55b and the high friction surface 55f can be made to have the same frictional coefficient. However, since the high friction surface 55f is arranged on the (radially-)outer circumferential side from the high friction surface 55b, the hysteresis torque between the high friction surface 55f and the side plate 17 is greater than the hysteresis torque between the high friction surface 55b and the pressure plate 39. Note that low friction surface 55c and the low friction surface 55g can be made to have the same frictional coefficient. The friction member 55 relatively rotates (may slide) relative to the low friction surfaces 55c and 55g and the flange portion 22b when a torsion is caused between the friction member 55 and the hub member 22 within a circumferentially movable range of the stopper portion 55d relative to the hole portion 22e, and slides respectively between the high friction surface 55b and the side plate 17, and between the high friction surface 55f and the pressure plate 39 when the stopper portion 55d abuts to the circumferential end wall of the hole portion 22e and a torsion is further caused between the side plates 17 and 18 and the hub member 22.

The structure of the others is the same as that in Example 1.

Next, the operation of the hysteresis section of the torque fluctuation absorber according to Example 6 will be described.

In the first hysteresis section (the portion including reference numerals 55, 39, and 40) on the (radially-)outer circumferential side of the hysteresis section 4, when a torsion (small torsion) is caused between the friction member 55 and the hub member 22 within a circumferentially movable range of the stopper portion 55d relative to the hole portion 22e, the low friction surfaces 55c and 55g of the friction member 55 and the flange portion 22b slide each other, that generates a small hysteresis torque. At that time, since the frictional coefficient between the high friction surface 55b of the friction member 55 and the pressure plate 39 is higher than the frictional coefficient between the low friction surface 55c of the friction member 55 and the flange portion 22b, the high friction surface 55b and the pressure plate 39 do not slide each other. Further, since the frictional coefficient between the high friction surface 55f of the friction member 55 and the side plate 17 is higher than the frictional coefficient between the low friction surface 55g of the friction member 55 and the flange portion 22b, the high friction surface 55g and the side plate 17 do not slide each other.

In the first hysteresis section (the portion including reference numerals 55, 39, and 40) on the (radially-)outer circumferential side of the hysteresis section 4, when the stopper portion 55d abuts to the circumferential end wall of the hole portion 22e, and a torsion (large torsion) is further caused between the side plates 17 and 18 and the hub member 22, the side plate 17 and the high friction surface 55f of the friction member 55 slide each other, and the high friction surface 55b of the friction member 55 and the pressure plate 39 slide each other, that generates a hysteresis torque greater than that in the case of small torsion. At that time, the low friction surfaces 55c and 55g of the friction member 55 and the flange portion 22b do not slide each other. Note that, since the frictional coefficient between the low friction surface 55c of the friction member 55 and the flange portion 22b is lower than the frictional coefficient between the high friction surface 55b of the friction member 55 and the pressure plate 39. However, since the stopper portion 55d abuts to the circumferential end wall of the hole portion 22e, which prevents (restricts) a torsion between the friction member 55 and the hub member 22, the low friction surface 55c and the flange portion 22b do not slide each other. Further, although the frictional coefficient between the low friction surface 55g of the friction member 55 and the flange portion 22b is lower than the frictional coefficient between the high friction surface 55f of the friction member 55 and the side plate 17, since the stopper portion 55d abuts to the circumferential end wall of the hole portion 22e, which restricts a torsion between the friction member 55 and the hub member 22, the low friction surface 55g of the friction member 55 and the flange portion 22b do not slide each other.

Note that, in the second hysteresis section (the portion including reference numerals 51, 52, and 53) on the (radially-)inner circumferential side of the hysteresis section 4, the thrust members 51 and 52 and the flange portion 22b slide each other regardless of a torsion angle between the side plates 17 and 18 and the hub member 22, thereby causing no change of the hysteresis torque. However, since the second hysteresis section (the portion including reference numerals 51, 52, and 53) is arranged on the (radially-)inner circumferential side from the first hysteresis section (the portion including reference numerals 55, 39, and 40), the hysteresis torque when the thrust members 51 and 52 and the flange portion 22b slide each other is less than the hysteresis torque when the low friction surfaces 55c and 55g of the friction member 55 and the flange portion 22b slide each other.

According to Example 6, since the first hysteresis section (the portion including reference numerals 55, 39, and 40) and the second hysteresis section (the portion including reference numerals 51, 52, and 53) radially sectioned in the hysteresis section 4, it is possible to attempt to achieve a downsizing thereof axially. Further, since the friction element arranged between the side plate 17 and the flange portion 22b, and between the pressure plate 39 and the flange portion 22b in the first hysteresis section (the portion including reference numerals 55, 39, and 40) is only the friction member 55, the number of components is reduced, which makes it possible to reduce the cost. Further, since the respective spring loads by the disc spring 40 and the disc spring 53 can be changed, the design freedom for the hysteresis characteristic in the hysteresis section 4 is increased. Further, relative to the first hysteresis section (the portion including reference numerals 55, 39, and 40), it is possible to realize a structure in which a hysteresis torque changes according to a torsion angle by the one disc spring 40, and to attempt to achieve a low cost and a shortening of its axial length. Further, since the stopper portion 55d of the friction member 55 and the hole portion 22e of the flange portion 22b are engaged with each other so as to be relatively unrotatable, it is possible to reduce the number of components.

It should be noted that any modifications may be done which fall under the scope of the present invention as defined by the appended claims.

### Explanation of Symbols

1: Torque fluctuation absorber
2: Limiter section
3: Damper section
4: Hysteresis section
5: Flywheel
6: Engine side rotary shaft (first rotary shaft)
7: Transmission side rotary shaft (second rotary shaft)
8, 9: Bolt
10: Support plate
11: Cover plate
11a: Hole portion
12: Disc spring
13: Pressure plate
13a: Convex portion
14: Lining plate
15, 16: Friction material
17: Side plate (third plate member)
17a: Window portion
17b: Concave portion
18: Side plate (first plate member)
18a: Window portion
18b: Hole portion
19: Rivet
20: Coil spring
21: Seat member
22: Hub member
22a: Hub portion
22b: Flange portion (second plate member)
22c: Window portion
22d: Concave portion
22e: Hole portion (against rotation)
23: Thrust member (second thrust member)
23a: Stopper portion
24: Control plate (second control plate)
24a: Concave portion
25: Low friction material (second low friction material)
26: Low friction material (slide member)
27: Control plate (slide member)
27a: Stopper portion (Engaging arm for stopper)
28: High friction material (slide member)
29: Thrust member (slide member)
29a: Stopper portion (against rotation)
30: Disc spring (elastic member)
32: High friction material (second high friction material)
33: Thrust member (second thrust member)
33a: Concave portion
35: High friction material (second high friction material)
36: Thrust member (second thrust member)
36a: Stopper portion
36b: Protruding portion
37: Thrust member (slide member)
37a: Stopper portion
37b: Concave portion
37c: Convex portion
38: High friction material (slide member)
38a: Hole portion
39: Pressure plate (slide member)
39a: Stopper portion (Engaging arm for stopper)
40: Disc spring (elastic member)
42: Thrust member (slide member)
42a: Stopper portion
43: High friction material (slide member)
44: Thrust member (second thrust member)
44a: Stopper portion (Engaging arm against stopper portion)
45: Disc spring (elastic member)
47: High friction material (second high friction material)
48: Thrust member (second thrust member)
48a, 48b: Stopper portion
49: Thrust member (slide member)
49a: Stopper portion
49b: Concave portion
50: High friction material (slide member)
51: Thrust member (fourth thrust member)
52: Thrust member (third thrust member)
53: Disc spring (second elastic member)
55: Friction member (slide member)
55a: Ring portion
55b: High friction surface
55c: Low friction surface
55d: Stopper portion
55e: (radially-)outer circumferential extension portion (extension portion)
55g: Low friction surface

A torque fluctuation absorber includes: a first plate member, a second plate member, arranged axially with a predetermined distance from the first plate member, a third plate member which rotates integrally with the first plate member, and is arranged axially with a predetermined distance from the second plate member; slide members located between the second plate member and the third plate member; and an elastic member which is supported by the first plate member and biases the second plate member towards the plurality of slide members. The plurality of slide members are configured to generate a first hysteresis torque when a torsion angle between the second plate member and the third plate member is within a predetermined range, and to generate a second hysteresis torque greater than the first hysteresis torque when the torsion angle exceeds the predetermined range.

## Claims

1. A torque fluctuation absorber (1), comprising:
a first plate member (18) to which a rotary power is transmitted from a first rotary shaft (6);
a second plate member (22b), arranged axially with a predetermined distance from the first plate member (18), wherein the second plate member (22b) transmits a rotary power to a second rotary shaft (7);
a third plate member (17) which rotates integrally with the first plate member (18), wherein the third plate member (17) is arranged axially with a predetermined distance from the second plate member (22b);
a plurality of slide members (26, 27, 28, 29, 37, 38, 39, 42, 43, 49, 50, 55) located between the second plate member (22b) and the third plate member (17); and
an elastic member (30, 40, 45) which is supported by the first plate member (18) and, wherein the elastic member (30, 40, 45) biases the second plate member (22b) towards the plurality of slide members (26, 27, 28, 29, 37, 38, 39, 42, 43, 49, 50, 55); wherein
the plurality of slide members (26, 27, 28, 29, 37, 38, 39, 42, 43, 49, 50, 55) are configured to generate a first hysteresis torque when a torsion angle between the second plate member (22b) and the third plate member (17) is within a predetermined range, and to generate a second hysteresis torque greater than the first hysteresis torque when the torsion angle exceeds the predetermined range,
the slide members (26, 27, 28, 29, 37, 38, 39, 42, 43, 49, 50, 55) are composed of a plurality of slide members (26, 27, 28, 29, 37, 38, 39, 42, 43, 49, 50, 55), a predetermined slide member thereamong is configured to be circumferentially movable within a circumferentially predetermined distance range relative to the third plate member (17), and to be prevented from circumferentially moving by the third plate member (17) when the predetermined slide member reaches the predetermined distance range;
the plurality of slide members (26, 27, 28, 29, 37, 38, 39, 42, 43, 49, 50, 55) generate the first hysteresis torque when a torsion is caused between the second plate member (22b) and the third plate member (17) in a state in which the predetermined slide member is circumferentially movable relative to the third plate member (17), and generate the second hysteresis torque when a torsion is caused between the second plate member (22b) and the third plate member (17) in a state in which the predetermined slide member is prevented from circumferentially moving by the third plate member (17),
the third plate member (17) has a concave or hole portion;
the predetermined slide member is a thrust member (29, 37, 42, 49) which has a stopper portion (29a, 39a, 42a, 49a) circumferentially movable within a circumferential distance range of the concave or hole portion;
the plurality of slide members (26, 27, 28, 29, 37, 38, 39, 42, 43, 49, 50, 55) have a high friction material (28, 38, 43, 50) located between the thrust member (29, 37, 42, 49) and the third plate member (17), and whose frictional coefficient is higher than that of the thrust member (29, 37, 42, 49);
when a torsion is caused between the second plate member (22b) and the third plate member (17) in a state in which the stopper portion (29a, 39a, 42a, 49a) is circumferentially movable within a circumferential distance range of the concave or hole portion, the thrust member (29, 37, 42, 49) slides relative to the third plate member (22b); and
when a torsion is caused between the second plate member (22b) and the third plate member (17) in a state in which the stopper portion (29a, 39a, 42a, 49a) is prevented from circumferentially moving by the concave or hole portion, the high friction material (28, 38, 43, 50) slides relative to the second plate member (22b),
**characterized in that**
the high friction material (28, 38, 43, 50) is engaged so as to be incapable of rotating relative to the thrust member (29, 37, 42, 49).

2. The torque fluctuation absorber (1) according to claim 1, wherein a position at which the second hysteresis torque is generated is on the outer circumferential side from a position at which the first hysteresis torque is generated.

3. The torque fluctuation absorber (1) according to claim 1, wherein the second plate member (22b) is subjected to a roughening treatment onto its surface facing the high friction material (28, 38, 43, 50).

4. A torque fluctuation absorber (1) according to claim 1, wherein
the third plate member (17) has a concave or hole portion, wherein
the slide member is a thrust member (29, 37, 42, 49) which has a stopper portion (29a, 39a, 42a, 49a) circumferentially movable within a circumferential distance range of the concave or hole portion; wherein
the thrust member (29, 37, 42, 49) or the second plate member (22b) is subjected to a roughening treatment onto its sliding surface between the thrust member and the second plate member (22b) so as to have a frictional coefficient higher than a frictional coefficient of a sliding surface between the thrust member (29, 37, 42, 49) and the third plate member (17); wherein
when a torsion is caused between the second plate member (22b) and the third plate member (17) in a state in which the stopper portion (29a, 39a, 42a, 49a) is circumferentially movable within a circumferential distance range of the concave or hole portion, the thrust member (29, 37, 42, 49) slides relative to the third plate member (17); wherein
when a torsion is caused between the second plate member (22b) and the third plate member (17) in a state in which the stopper portion (29a, 39a, 42a, 49a) is prevented from circumferentially moving by the concave or hole portion, the thrust member (29, 37, 42, 49) slides relative to the second plate member (22b).

5. A torque fluctuation absorber (1) according to any one of claims 1 to 4, wherein the torque fluctuation absorber (1) has a second thrust member (23, 33, 36, 44, 48) which is located between the second plate member (22b) and the elastic member (30, 40, 45), wherein the second thrust member (23, 33, 36, 44, 48) is biased towards the second plate member (22b) by the elastic member (30, 40, 45), and wherein the second thrust member (23, 33, 36, 44, 48) engages to be axially movable relative to the first plate member (18).

## Patentansprüche

1. Drehmomentschwankungsaufnahmevorrichtung (1), die Folgendes aufweist:
ein erstes Plattenbauteil (18), zu dem eine Drehkraft von einer ersten Drehwelle (6) übertragen wird,
ein zweites Plattenbauteil (22b), das in axialer Richtung in einem vorbestimmten Abstand von dem ersten Plattenbauteil (18) angeordnet ist, wobei das zweite Plattenbauteil (22b) eine Drehkraft zu einer zweiten Drehwelle (7) überträgt;
ein drittes Plattenbauteil (17), das sich einstückig mit dem ersten Plattenbauteil (18) dreht, wobei das dritte Plattenbauteil (17) in axialer Richtung in einem vorbestimmten Abstand von dem zweiten Plattenbauteil (22b) angeordnet ist;
eine Vielzahl von Gleitbauteilen (26, 27, 28, 29, 37, 38, 39, 42, 43, 49, 50, 55), die zwischen dem zweiten Plattenbauteil (22b) und dem dritten Plattenbauteil (17) angeordnet sind; und
ein elastisches Bauteil (30, 40, 45), das durch das erste Plattenbauteil (18) gestützt ist, und wobei das elastische Bauteil (30, 40, 45) das zweite Plattenbauteil (22b) in Richtung der Vielzahl von Gleitbauteilen (26, 27, 28, 29, 37, 38, 39, 42, 43, 49, 50, 55) vorspannt; wobei
die Vielzahl von Gleitbauteilen (26, 27, 28, 29, 37, 38, 39, 42, 43, 49, 50, 55) gestaltet ist, um ein erstes Hysteresedrehmoment zu erzeugen, wenn ein Torsionswinkel zwischen dem zweiten Plattenbauteil (22b) und dem dritten Plattenbauteil (17) innerhalb eines vorbestimmten Bereichs liegt, und um ein zweites Hysteresedrehmoment zu erzeugen, das größer ist als das erste Hysteresedrehmoment, wenn der Torsionswinkel den vorbestimmten Bereich überschreitet,
die Gleitbauteile (26, 27, 28, 29, 37, 38, 39, 42, 43, 49, 50, 55) aus einer Vielzahl von Gleitbauteilen (26, 27, 28, 29, 37, 38, 39, 42, 43, 49, 50, 55) gebildet sind, wobei ein vorbestimmtes Gleitbauteil unter ihnen gestaltet ist, um innerhalb eines in Umfangsrichtung vorbestimmten Abstandbereichs relativ zu dem dritten Plattenbauteil (17) in Umfangsrichtung beweglich zu sein, und um eine Bewegung in Umfangsrichtung durch das dritte Plattenbauteil (17) zu verhindern, wenn das vorbestimmte Gleitbauteil den vorbestimmten Abstandsbereich erreicht;
die Vielzahl von Gleitbauteilen (26, 27, 28, 29, 37, 38, 39, 42, 43, 49, 50, 55) das erste Hysteresedrehmoment erzeugt, wenn eine Torsion zwischen dem zweiten Plattenbauteil (22b) und dem dritten Plattenbauteil (17) in einem Zustand bewirkt wird, in dem das vorbestimmte Gleitbauteil relativ zu dem dritten Plattenbauteil (17) in Umfangsrichtung beweglich ist, und das zweite Hysteresedrehmoment erzeugt, wenn eine Torsion zwischen dem zweiten Plattenbauteil (22b) und dem dritten Plattenbauteil (17) in einem Zustand bewirkt wird, in dem verhindert wird, dass sich das vorbestimmte Gleitbauteil durch das dritte Plattenbauteil (17) in Umfangsrichtung bewegt,
das dritte Plattenbauteil (17) einen hohlen Abschnitt oder einen Lochabschnitt hat;
das vorbestimmte Gleitbauteil ein Axialbauteil (29, 37, 42, 49) ist, das einen Anschlagsabschnitt (29a, 39a, 42a, 49a) hat, der innerhalb eines Umfangsabstandsbereichs des hohlen Abschnitts oder des Lochabschnitts in Umfangsrichtung beweglich ist;
die Vielzahl von Gleitbauteilen (26, 27, 28, 29, 37, 38, 39, 42, 43, 49, 50, 55) ein Material (28, 38, 43, 50) mit hoher Reibung hat, das zwischen dem Axialbauteil (29, 37, 42, 49) und dem dritten Plattenbauteil (17) angeordnet ist, und wobei dessen Reibungskoeffizient höher ist als der des Axialbauteils (29, 37, 42, 49);
wenn eine Torsion zwischen dem zweiten Plattenbauteil (22b) und dem dritten Plattenbauteil (17) in einem Zustand bewirkt wird, in dem der Anschlagsabschnitt (29a, 39a, 42a, 49a) innerhalb eines Umfangsabstandsbereichs des hohlen Abschnitts oder des Lochabschnitts in Umfangsrichtung beweglich ist, das Axialbauteil (29, 37, 42, 49) relativ zu dem dritten Plattenbauteil (22b) gleitet; und
wenn eine Torsion zwischen dem zweiten Plattenbauteil (22b) und dem dritten Plattenbauteil (17) in einem Zustand bewirkt wird, in dem verhindert wird, dass sich der Anschlagsabschnitt (29a, 39a, 42a, 49a) durch den hohlen Abschnitt oder den Lochabschnitt in Umfangsrichtung bewegt, das Material (28, 38, 43, 50) mit hoher Reibung relativ zu dem zweiten Plattenbauteil (22b) gleitet,
**dadurch gekennzeichnet, dass**
das Material (28, 38, 43, 50) mit hoher Reibung in Eingriff ist, um nicht in der Lage zu sein, sich relativ zu dem Axialbauteil (29, 37, 42, 49) zu drehen.

2. Drehmomentschwankungsaufnahmevorrichtung (1) nach Anspruch 1, wobei eine Position, an der das zweite Hysteresedrehmoment erzeugt wird, an der Außenumfangsseite von einer Position liegt, an der das erste Hysteresedrehmoment erzeugt wird.

3. Drehmomentschwankungsaufnahmevorrichtung (1) nach Anspruch 1, wobei das zweite Plattenbauteil (22b) einer Aufraubehandlung an seiner Fläche unterzogen wird, die zu dem Material (28, 38, 43, 50) mit hoher Reibung zugewandt ist.

4. Drehmomentschwankungsaufnahmevorrichtung (1) nach Anspruch 1, wobei
das dritte Plattenbauteil (17) einen hohlen Abschnitt oder einen Lochabschnitt hat, wobei
das Gleitbauteil ein Axialbauteil (29, 37, 42, 49) ist, das einen Anschlagsabschnitt (29a, 39a, 42a, 49a) hat, der innerhalb eines Umfangsabstandsbereichs des hohlen Abschnitts oder des Lochabschnitts in Umfangsrichtung beweglich ist; wobei
das Axialbauteil (29, 37, 42, 49) oder das zweite Plattenbauteil (22b) einer Aufraubehandlung an dessen Gleitfläche zwischen dem Axialbauteil und dem zweiten Plattenbauteil (22b) unterzogen wird, um einen Reibungskoeffizienten zu haben, der höher ist als ein Reibungskoeffizient einer Gleitfläche zwischen dem Axialbauteil (29, 37, 42, 49) und dem dritten Plattenbauteil (17); wobei
wenn eine Torsion zwischen dem zweiten Plattenbauteil (22b) und dem dritten Plattenbauteil (17) in einem Zustand bewirkt wird, in dem der Anschlagsabschnitt (29a, 39a, 42a, 49a) innerhalb eines Umfangsabstandsbereichs des hohlen Abschnitts oder des Lochabschnitts in Umfangsrichtung beweglich ist, das Axialbauteil (29, 37, 42, 49) relativ zu dem dritten Plattenbauteil (17) gleitet; wobei
wenn eine Torsion zwischen dem zweiten Plattenbauteil (22b) und dem dritten Plattenbauteil (17) in einem Zustand bewirkt wird, in dem verhindert wird, dass sich der Anschlagsabschnitt (29a, 39a, 42a, 49a) durch den hohlen Abschnitt oder den Lochabschnitt in Umfangsrichtung bewegt, das Axialbauteil (29, 37, 42, 49) relativ zu dem zweiten Plattenbauteil (22b) gleitet.

5. Drehmomentschwankungsaufnahmevorrichtung (1) nach einem der Ansprüche 1 bis 4, wobei die Drehmomentschwankungsaufnahmevorrichtung (1) ein zweites Axialbauteil (23, 33, 36, 44, 48) hat, das zwischen dem zweiten Plattenbauteil (22b) und dem elastischen Bauteil (30, 40, 45) angeordnet ist, wobei das zweite Axialbauteil (23, 33, 36, 44, 48) in Richtung des zweiten Plattenbauteils (22b) durch das elastische Bauteil (30, 40, 45) vorgespannt ist, und wobei das zweite Axialbauteil (23, 33, 36, 44, 48) eingreift, um relativ zu dem ersten Plattenbauteil (18) in axialer Richtung beweglich zu sein.

## Revendications

1. Absorbeur de fluctuation de couple (1) comprenant :
un premier élément de plaque (18) auquel une puissance rotative est transmise depuis un premier arbre rotatif (6) ;
un deuxième élément de plaque (22b) agencé axialement avec une distance prédéterminée par rapport au premier élément de plaque (18), dans lequel le deuxième élément de plaque (22b) transmet une puissance de rotation au second arbre rotatif (7) ;
un troisième élément de plaque (17) qui tourne de manière solidaire avec le premier élément de plaque (18), dans lequel le troisième élément de plaque (17) est agencé axialement avec une distance prédéterminée par rapport au deuxième élément de plaque (22b) ;
une pluralité d'éléments de coulissement (26, 27, 28, 29, 37, 38, 39, 42, 43, 49, 50, 55) positionnés entre le deuxième élément de plaque (22b) et le troisième élément de plaque (17) ; et
un élément élastique (30, 40, 45) qui est supporté par le premier élément de plaque (18) et, dans lequel l'élément élastique (30, 40, 45) sollicite le deuxième élément de plaque (22b) vers la pluralité d'éléments de coulissement (26, 27, 28, 29, 37, 38, 39, 42, 43, 49, 50, 55) ; dans lequel :
la pluralité d'éléments de coulissement (26, 27, 28, 29, 37, 38, 39, 42, 43, 49, 50, 55) sont configurés pour générer un premier couple d'hystérésis lorsqu'un angle de torsion entre le deuxième élément de plaque (22b) et le troisième élément de plaque (17) est dans une plage prédéterminée, et pour générer un second couple d'hystérésis supérieur au premier couple d'hystérésis lorsque l'angle de torsion dépasse la plage prédéterminée,
les éléments de coulissement (26, 27, 28, 29, 37, 38, 39, 42, 43, 49, 50, 55) sont composés d'une pluralité d'éléments de coulissement (26, 27, 28, 29, 37, 38, 39, 42, 43, 49, 50, 55), parmi lesquels un élément de coulissement prédéterminé est configuré pour être circonférentiellement mobile dans une plage de distance circonférentiellement prédéterminée par rapport au troisième élément de plaque (17), et dont le déplacement est empêché de manière circonférentielle par le troisième élément de plaque (17) lorsque l'élément de coulissement prédéterminé atteint la plage de distance prédéterminée ;
la pluralité d'élément de coulissement (26, 27, 28, 29, 37, 38, 39, 42, 43, 49, 50, 55) génère un premier couple d'hystérésis lorsqu'une torsion est provoquée entre le deuxième élément de plaque (22b) et le troisième élément de plaque (17) dans un état dans lequel l'élément de coulissement prédéterminé est circonférentiellement mobile par rapport au troisième élément de plaque (17) et génère le second couple d'hystérésis lorsqu'une torsion est provoquée entre le deuxième élément de plaque (22b) et le troisième élément de plaque (17) dans un état dans lequel le déplacement de l'élément de coulissement prédéterminé est empêché de manière circonférentielle par le troisième élément de plaque (17),
le troisième élément de plaque (17) a une partie concave ou une partie de trou ;
l'élément de coulissement prédéterminé est un élément de poussée (29, 37, 42, 49) qui a une partie de butée (29a, 39a, 42a, 49a) circonférentiellement mobile dans une plage de distance circonférentielle de la partie concave ou la partie de trou ;
la pluralité d'éléments de coulissement (26, 27, 28, 29, 37, 38, 39, 42, 43, 49, 50, 55) ont un matériau à haut coefficient de frottement (28, 38, 43, 50) positionné entre l'élément de poussée (29, 37, 42, 49) et le troisième élément de plaque (17), et dont le coefficient de frottement est supérieur à celui de l'élément de poussée (29, 37, 42, 49) ;
lorsqu'une torsion est provoquée entre le deuxième élément de plaque (22b) et le troisième élément de plaque (17) dans un état dans lequel la partie de butée (29a, 39a, 42a, 49a) est circonférentiellement mobile dans une plage de distance circonférentielle de la partie concave ou la partie de trou, l'élément de poussée (29, 37, 42, 49) coulisse par rapport au troisième élément de plaque (22b) ; et
lorsqu'une torsion est provoquée entre le deuxième élément de plaque (22b) et le troisième élément de plaque (17) dans un état dans lequel on empêche le déplacement de la partie de butée (29a, 39a, 42a, 49a) de manière circonférentielle par la partie concave ou partie de trou, le matériau à haut coefficient de frottement (28, 38, 43, 50) coulisse par rapport au deuxième élément de plaque (22b),
**caractérisé en ce que** :
le matériau à haut coefficient de frottement (28, 38, 43, 50) est mis en prise afin de ne pas pouvoir tourner par rapport à l'élément de poussée (29, 37, 42, 49).

2. Absorbeur de fluctuation de couple (1) selon la revendication 1, dans lequel une position à laquelle le second couple d'hystérésis est généré, est du côté circonférentiel externe à partir d'une position dans laquelle le premier couple d'hystérésis est généré.

3. Absorbeur de fluctuation de couple (1) selon la revendication 1, dans lequel le second élément de plaque (22b) est soumis à un traitement de rugosité sur sa surface orientée vers le matériau à haut coefficient de frottement (28, 38, 43, 50).

4. Absorbeur de fluctuation de couple (1) selon la revendication 1, dans lequel :
le troisième élément de plaque (17) a une partie concave ou partie de trou, dans lequel :
l'élément de coulissement est un élément de poussée (29, 37, 42, 49) qui a une partie de butée (29a, 39a, 42a, 49a) circonférentiellement mobile dans une plage de distance circonférentielle de la partie concave ou partie de trou ; dans lequel :
l'élément de poussée (29, 37, 42, 49) ou le deuxième élément de plaque (22b) est soumis à un traitement de rugosité sur sa surface coulissante entre l'élément de poussée et le deuxième élément de plaque (22b) afin d'avoir un coefficient de frottement supérieur à un coefficient de frottement d'une surface coulissante entre l'élément de poussée (29, 37, 42, 49) et le troisième élément de plaque (17) ; dans lequel :
lorsqu'une torsion est provoquée entre le deuxième élément de plaque (22b) et le troisième élément de plaque (17) dans un état dans lequel la partie de butée (29a, 39a, 42a, 49a) est circonférentiellement mobile dans une plage de distance circonférentielle de la partie concave ou partie de trou, l'élément de poussée (29, 37, 42, 49) coulisse par rapport au troisième élément de plaque (17) ; dans lequel :
lorsqu'une torsion est provoquée entre le deuxième élément de plaque (22b) et le troisième élément de plaque (17) dans un état dans lequel le déplacement de la partie de butée (29a, 39a, 42a, 49a) est empêché de manière circonférentielle par la partie concave ou partie de trou, l'élément de poussée (29, 37, 42, 49) coulisse par rapport au deuxième élément de plaque (22b).

5. Absorbeur de fluctuation de couple (1) selon l'une quelconque des revendications 1 à 4,
dans lequel l'absorbeur de fluctuation de couple (1) a un second élément de poussée (23, 33, 36, 44, 48) qui est positionné entre le deuxième élément de plaque (22b) et l'élément élastique (30, 40, 45), dans lequel le deuxième élément de poussée (23, 33, 36, 44, 48) est sollicité vers le deuxième élément de plaque (22b) par l'élément élastique (30, 40, 45) et dans lequel le deuxième élément de poussée (23, 33, 36, 44, 48) se met en prise pour être axialement mobile par rapport au premier élément de plaque (18).
